# EUROPÄISCHE PATENTSCHRIFT

(11) **EP 1 108 157 B1**
(45) Veröffentlichungstag und Bekanntmachung des Hinweises auf die Patenterteilung: **15.10.2003**
(21) Anmeldenummer: 99946066.0
(22) Anmeldetag: 30.08.1999
(51) Int. Cl.: F16G 13/16

(54) **ENERGIEFÜHRUNGSKETTE ZUM FÜHREN VON LEITUNGEN MIT RÄUMLICH BEWEGLICHEN KETTENGLIEDERN**
ENERGY GUIDE CHAIN FOR GUIDING LINES COMPRISING CHAIN LINKS WHICH CAN MOVE IN THREE DIMENSIONS
CHAINE DE GUIDAGE DE L'ENERGIE POUR GUIDER DES CONDUCTEURS DOTEE DE MAILLONS MOBILE DANS L'ESPACE

(30) Priorität: 31.08.1998 DE 19839575
(43) Veröffentlichungstag der Anmeldung: 20.06.2001
(73) Patentinhaber: Kabelschlepp GmbH, 57074 Siegen (DE)
(72) Erfinder: ACHS, Stephan, Raymond, Bayside, WI 53217 (US); WEHLER, Herbert, D-57290 Neunkirchen (DE); WEBER, Willibald, D-57250 Netphen (DE)
(74) Vertreter: Neumann, Ditmar
(86) Internationale Anmeldenummer: EP9906373
(87) Internationale Veröffentlichungsnummer: WO00012913

(56) Entgegenhaltungen:
- EP-A- 0 154 882
- EP-A- 0 277 512
- EP-A- 0 384 153
- EP-A- 0 544 051
- DE-C- 3 930 291
- DE-U- 9 313 011
- DE-U- 29 700 917
- GB-A- 1 585 656
- US-A- 1 945 357
- US-A- 3 473 769
- US-A- 3 804 232
- US-A- 4 953 735
- US-A- 5 307 923

## Beschreibung

Die Erfindung betrifft eine Energieführungskette zum Führen von Leitungen zwischen einem ortsfesten Anschluß und einem beweglichen Anschluß mit beweglichen Kettengliedern, die jeweils einen sich in Richtung der Energieführungskette erstreckenden Kanalabschnitt begrenzen.

Durch die GB 1 585 656 A1 ist eine Energieführungskette zum Führen von Leitungen zwischen einem ortsfesten Anschluß und einem beweglichen Anschluß bekannt. Die Energieführungskette ist durch gelenkig miteinander verbundene metallische Kettenglieder gebildet. Die Kettenglieder weisen beabstandete metallische Laschen auf, die aus einem Blech ausgestanzt und entsprechend geformt sind. Die beabstandeten Laschen eines jeden Kettengliedes werden durch eine Verbindungsplatte miteinander verbunden. Die Verbindung erfolgt durch Schweißen, so daß die Kettenglieder eine Schweißkonstruktion bilden.

Zur gelenkigen Verbindung der benachbarten Kettenglieder weisen die Laschen in einem Endbereich ein kreisförmiges Loch auf. Im gegenüberliegenden Endbereich jeder Lasche ist ein Langloch ausgebildet. Die Löcher des einen Kettengliedes werden mit den Langlöchern des benachbarten Kettengliedes so positioniert, daß ein Bolzen durch das Langloch und durch das Loch hindurch geschoben werden kann. Der Bolzen weist einen erweiterten Kopf auf, dessen Querschnitt größer ist als der Loch- bzw. Langlochquerschnitt. Zur Sicherung des Bolzens ist ein Sicherungsring vorgesehen, der am Bolzen angeordnet wird.

Die Ausgestaltung des Langlochs ist aufgrund der Schweißkonstruktion der Kettenglieder notwendig, da durch die Langlöcher fertigungstechnisch bedingte Ungenauigkeiten der Schweißkonstruktion ausgeglichen werden.

Die Kettenglieder der Energieführungskette nach GB 1 585 656 A1 sind um die Gelenkbolzen, die im wesentlichen quer zur Längsrichtung der Energieführungskette verlaufen, verschwenkbar. Eine seitliche Auslenkbarkeit ist bei einer solchen Energieführungskette nicht vorgesehen.

Eine weitere Ausführungsform einer herkömmlichen Energieführungskette, bei der die Kettenglieder um quer zur Längsrichtung der Energieführungskette verlaufende Achsen auslenkbar sind, beschreibt die EP 0 154 882 A1. Die Kettenglieder dieser Energieführungskette bestehen aus einem Kunststoff. Sie sind gebildet durch Kettenlaschen, die einteilig ausgebildet sind. Jede Kettenlasche besitzt an einem Ende eine zentrale Gelenkbohrung. Am anderen Ende jeder Kettenlasche ist auf der entgegengesetzten Seite ein zentraler Gelenkzapfen angeformt. Wenn das eine Ende einer Kettenlasche mit dem anderen Ende einer benachbarten Kettenlasche verbunden wird, greift der Gelenkzapfen in die Gelenkbohrung ein. Hierdurch kann ein Kettenstrang gebildet werden. Zwei Kettenstränge werden durch Stege miteinander verbunden.

Durch die EP 0 544 051 A1 ist eine Energieführungskette bekannt, durch die eine isotrope Verbiegbarkeit im Raum, d. h. eine gleichmäßige Verbiegbarkeit im Raum, ermöglicht wird.

Eine solche Energieführungskette ist beispielsweise für ein mehrachsiges Handhabungsgerät, wie z. B. einen Roboter, notwendig.

Diese Energieführungskette ist durch einen extrudierten Schlauch gebildet, dessen Außenumfangswand mit einer Vielzahl in Längsrichtung der Energieführungskette im Abstand voneinander angeordnete, quer zur Längsrichtung der Energieführungskette verlaufende Umfangsschlitze versehen, die je um den gesamten Umfang des Schlauchs umlaufend nur von einem gelenkig verbindenden Steg oder nur von zwei sich im Winkelabstand von 180° diametral gegenüberliegenden gelenkig wirkenden Stegen unterbrochen ist bzw. sind. Die Stege benachbarter Umfangsschlitze sind um einen Umfangswinkel von 90° zueinander versetzt. Die Breite der Umfangsschlitze und deren Abstände voneinander sind entsprechend einem gewünschten maximalen Biegeradius der Energieführungskette dimensioniert.

Problematisch bei einer solchen Energieführungskette ist, daß bei einer Beschädigung eines Abschnitts der Energieführungskette, die gesamte Energieführungskette ausgetauscht werden muß, da die Energieführungskette aus einem extrudierten Kunststoffprofil besteht. Dies hat einen erhöhten Reparaturaufwand zufolge, da auch die in der Energieführungskette geführten Leitungen und Schläuche aus der zu ersetzenden Energieführungskette entfernt und in die neue Energieführungskette eingelegt werden müssen.

Die Festlegung der Energieführungskette am ortsfesten Anschluß bzw. am beweglichen Anschluß erfolgt durch Kettenglieder, die mit einem entsprechenden Anschlußteil verbunden werden. Durch die EP 0 384 153 ist die Ausgestaltung von unterschiedlichen Kettenendgliedern bekannt. Die Kettenendglieder weisen Seitenlaschen auf, die durch eine Bodenplatte miteinander verbunden sind. Die Kettenendglieder sind gelenkig mit dem benachbarten Kettenglied der Energieführungskette verbunden. Die Bodenplatte wird mit einer Auf- bzw. einer Unterlage so verschraubt, daß das Kettenendglied starr mit der Auf- oder Unterlage verbunden wird. Eine weitere Ausgestaltung eines Kettenendgliedes mit einer Zugentlastungseinrichtung für eine Energieführungskette ist durch das Gebrauchsmuster G 93 13 011 bekannt. Auch bei diesem Kettenendglied ist eine Bodenplatte vorgesehen, die mit einer Auf- oder Unterlage verbunden wird.

Hiervon ausgehend liegt der vorliegenden Erfindung die Aufgabe zugrunde, die bekannte Energieführungskette zum Führen von Leitungen mit räumlich auslegbaren Kettengliedern so auszubilden, daß die Energieführungskette mit einem relativ geringen Aufwand wieder instandsetzbar ist. Ein weiteres Ziel der Erfindung ist es, die Energieführungskette so auszubilden, daß diese höhere Leitungsgewichte aufnehmen kann. Ein noch weiteres Ziel der Erfindung ist es, ein Anschlußglied anzugeben, welches leicht mit an einem Anschlußpunkt festlegbar ist, insbesondere ein Anschlußglied anzugeben, welches die Auslenkbarkeit der Energieführungskette unterstützt.

Erfindungsgemäß wird diese Aufgabe durch eine Energieführungskette zum Führen von Leitungen mit den Merkmalen des Anspruchs 1 gelöst. Vorteilhafte Weiterbildungen und Ausgestaltungen sind Gegenstand der jeweiligen abhängigen Ansprüche.

Im Gegensatz zum Stand der Technik, wie er durch die EP 0 544 051 A1 gebildet ist, zeichnet sich die erfindungsgemäße Energieführungskette dadurch aus, daß diese durch einzelne räumlich begrenzte, d. h. dreidimensional, bewegliche Kettenglieder aufgebaut ist. Bei einer extrudierten Energieführungskette nach der EP 0 544 051 ist eine Gelenkigkeit nur dann möglich, wenn das Extrusionsprofil eine gewisse Elastizität aufweist. Hierdurch bedingt kann eine solche Energieführungskette nur relativ geringe Leitungsgewichte aufnehmen. Bei der Energieführungskette, wie sie erfindungsgemäß vorgeschlagen wird, weist jedes Kettenglied zwei voneinander beabstandete einander gegenüberliegende, sich an eine Längsrichtung der Energieführungskette erstreckende, Laschen auf, die durch wenigstens eine Traverse miteinander verbunden sind. Jede Kettenlasche weist einen Gelenkkörper und eine Gelenkaufnahme auf, die im wesentlichen quer zur Längsrichtung der Energieführungskette verlaufen. Der Gelenkkörper einer Kettenlasche greift in die Gelenkaufnahme einer benachbarten Kettenlasche ein. Die Gelenkverbindung, wie sie durch den Gelenkkörper und die Gelenkaufnahme gebildet ist, ist kein integraler Bestandteil der Kettenglieder, wie dies bei einem extrudierten Energieführungskettenprofil der Fall ist. Hierdurch können die Gelenkkörper und die Gelenkaufnahme so ausgebildet werden, daß diese höher belastbar sind. Dies gilt auch für die Kettenlaschen und die Traverse. Dadurch, daß die Kettenglieder durch die Gelenkverbindungen lösbar miteinander verbunden sind, kann auch ein Instandsetzen der Energieführungskette erfolgen, wenn ein oder mehrere Kettenglieder schadhaft geworden sind.

Bei der Energieführungskette nach dem erfinderischen Vorschlag ist zwischen den sich teilweise überlappenden Kettenlaschen wenigstens zweier benachbarter Kettenglieder jeweils ein Freiraum vorgesehen. Der Gelenkkörper weist zwei diametral gegenüberliegende Außenmantelbereiche auf Ebenfalls weist die Gelenkbohrung zwei diametral gegenüberliegende Innenmantelbereiche auf. Vorzugsweise verlaufen die Normalen der Außenmantelbereiche und der Innenmantelbereiche verlaufen im wesentlichen senkrecht zur Längsrichtung der Energieführungskette. Ragt der Gelenkkörper in die Gelenkaufnahme ein, so liegen Außenmantelbereiche und Innenmantelbereiche einander an. Der Außenmantelbereich und der Innenmantelbereich gewährleisten eine Beweglichkeit der Kettenglieder um eine im wesentlichen quer zur Längsrichtung der Energieführungskette verlaufende Achse. Die Verschwenkbarkeit der einzelnen Kettenglieder relativ zueinander wird dadurch erreicht, daß lediglich die Außenmantelbereiche und die Innenmantelbereiche aneinander liegen. Zwischen den weiteren Mantelbereichen des Gelenkkörpers und der Gelenkaufnahme ist ein Spiel vorgesehen, der eine Auslenkbarkeit im wesentlichen quer zur Längsrichtung der Energieführungskette erlaubt.

Nach einer vorteilhaften Ausgestaltung der Energieführungskette wird vorgeschlagen, daß der Gelenkkörper zylinderförmig ausgebildet ist. Die Gelenkaufnahme weist vorzugsweise einen im wesentlichen ovalen Querschnitt auf. Unter einem ovalen Querschnitt wird auch eine Race-track-Form verstanden. Der Abstand der im wesentlichen parallel zueinander verlaufenden Abschnitte der Race-track-Form entspricht im wesentlichen dem Durchmesser des Gelenkkörpers, so daß der Gelenkkörper um seine Längsachse verschwenkbar ist. Dadurch, daß die Gelenkaufnahme einen im wesentlichen ovalen Querschnitt aufweist, besteht zwischen dem Gelenkkörper und der Gelenkaufnahme ein Spiel, welches eine Auslenkbarkeit um eine im wesentlichen senkrecht zur Längsachse des Gelenkkörpers und zur Längsrichtung der Energieführungskette verlaufende Achse ermöglicht.

Statt den Gelenkkörper zylinderförmig auszubilden, kann auch die Gelenkaufnahme als solche einen kreisförmigen Querschnitt aufweisen. Der Gelenkkörper weist dann einen im wesentlichen ovalen Querschnitt auf. Die Querschnittsfläche der kreisförmigen Gelenkaufnahme ist größer als die Querschnittsfläche des Gelenkkörpers. Auch bei dieser Ausgestaltung der Gelenkverbindung zweier benachbarter Kettenglieder kann eine räumliche Auslenkbarkeit dieser Kettenglieder erreicht werden.

Die Kettenlaschen und die Traverse sind vorzugsweise einteilig aus einem Kunststoff hergestellt sein. Das Kettenglied weist dann ein im wesentlichen U-förmiges Profil auf Die Kettenlaschen können mit einem Verschlußbügel bzw. Verschlußdeckel ausgebildet sein, so daß ein Zugang zu dem Kanal der Energieführungskette ermöglicht wird. Hierdurch ist es auch möglich, nachträglich Leitungen in den Kanal zu verlegen oder einzelne Leitungen aus dem Kanal zu entfernen. Es ist auch möglich, die einzelnen Leitungen in der Energieführungskette zu überprüfen, ohne daß diese aus der Energieführungskette herausgezogen werden müssen, wie dies bei einer Energieführungskette nach der EP 0 544 051 A1 der Fall ist.

Gemäß einer weiteren vorteilhaften Ausgestaltung der erfindungsgemäßen Energieführungskette wird vorgeschlagen, daß zwei benachbarte Kettenglieder relativ zueinander in einem Winkel von ca. 45° verschwenkbar sind.

Nach einer noch weiteren vorteilhaften Ausgestaltung der erfindungsgemäßen Energieführungskette wird vorgeschlagen, daß der Gelenkkörper aus durch Schlitze voneinander getrennten Gelenkkörpersegmenten gebildet ist. Insbesondere weist der Gelenkkörper im Bereich seines freien Endabschnittes einen radial auswärts gerichteten Kragen auf. Bei einer solchen Ausgestaltung des Gelenkkörpers wird der Gelenkkörper bzw. seine Gelenkkörpersegmente beim Durchführen des Gelenkkörpers durch die Gelenkaufnahme zusammengedrückt, so daß der Gelenkkörper bzw. die Gelenkkörpersegmente nach erfolgter Durchführung in ihre Ausgangsstellung zurückkehren, so daß der Kragen um den Rand der Gelenkaufnahme herum greift. Der Kragen hat eine gewisse Sicherheitsfunktion, da er einen verbesserten Halt der Kettenglieder ermöglicht. Um sicherzustellen, daß der Kragen keine Mitnehmerfunktion während eines Betriebes der Energieführungskette übernimmt, wird vorgeschlagen, daß konzentrisch zu einer Gelenkaufnahme eine Vertiefung vorgesehen ist, in die der Kragen mit Spiel eingreift. Vorzugsweise ist die Vertiefung so bemessen, daß der Kragen nicht seitlich von der Kettenlasche vorsteht. Sollte die Seitenfläche der Kettenlasche an einem Gegenstand entlang schleifen, so wird der Kragen nicht abgeschliffen, da dieser innerhalb der Kettenlasche angeordnet ist. Durch diese Anordnung wird auch eine mögliche Verletzungsgefahr gegenüber einem aus der Kettenlasche vorstehenden Kragen verringert.

Nach einer weiteren vorteilhaften Ausgestaltung dcr erfindungsgemäßen Energieführungskette wird vorgeschlagen, daß die Traverse einen konvex gekrümmten Abschnitt aufweist, der in einer im wesentlichen quer zur Kettenlasche verlaufenden Ebene liegt. Die Traverse weist desweiteren einen gegenüberliegenden, korrespondierenden zum konvex gekrümmten Abschnitt ausgebildeten Bereich auf. Die Kettenglieder der Energieführungskette sind so angeordnet, daß der Abschnitt der Traverse eines Kettengliedes in den Bereich der Traverse eines benachbarten Kettengliedes eingreift.

Durch diese Ausgestaltung der Traverse wird erreicht, daß benachbarte Kettenglieder beim Verschwenken geführt werden. Eine Führung der Kettenglieder wird vorzugsweise dadurch erreicht, daß der konvex gekrümmte Abschnitt an einem freien Endbereich eines sich in Längsrichtung der Energieführungskette erstreckenden Vorsprung ausgebildet ist. Die Traverse weist eine Ausnehmung auf, die in den Bereich übergeht, wobei sich die Ausnehmung von einer Stirnfläche der Traverse in Richtung des Bereichs verjüngt. Durch die Verjüngung des Bereichs kann eine Begrenzung der Auslenkbarkeit benachbarter Kettenglieder erreicht werden. Durch die vorteilhafte Weiterbildung der Energieführungskette wird auch erreicht, daß die Traversen quasi einen Deckel bilden, der die in der Energieführungskette verlegten Leitungen gegen äußere Einwirkungen schützt. Insbesondere wird verhindert, daß Schmutzpartikel in die Energieführungskette hineingelangen.

Die Kettenglieder der Energieführungskette sind vorzugsweise aus einem Kunststoff hergestellt. Insbesondere wird vorgeschlagen, daß der Kunststoff glasfaserverstärkt ist. Zur Vereinfachung der Herstellung der einzelnen Kettenglieder wird nach einer weiteren vorteilhaften Ausgestaltung der Energieführungskette vorgeschlagen, daß zumindest der Abschnitt und der Bereich symmetrisch bezüglich einer im wesentlichen parallel zur Längsachse der Energieführungskette verlaufenden Achse ausgebildet sind.

Zur Aufnahme höherer Leitungsgewichte oder für größere freitragende Längen der Energieführungskette wird vorgeschlagen, daß zwei benachbarte Kettenglieder zwei im Abstand zueinander liegende äußere Gelenkachsen aufweisen, wobei die benachbarten Glieder Traversen aufweisen, deren Gesamterstreckung zwischen den Gelenkachsen größer ist als der Abstand der Gelenkachsen. Hierdurch wird eine Vorspannung der Energieführungskette erreicht, durch die die Energieführungskette höhere Leitungsgewichte aufnehmen kann. Die Energieführungskette mit Vorspannung kann auch eine größere freitragende Länge aufweisen, als dies bei einer Energieführungskette ohne Vorspannung der Fall ist.

Zur Begrenzung des Verschwenkwinkels benachbarter Kettenglieder und somit auch zur Ausbildung eines vorgegebenen Krümmungsradius', wird vorgeschlagen, daß wenigstens zwei benachbarte Kettenglieder zwei voneinander beabstandete einander gegenüberliegende, sich quer zur Längsrichtung der Energieführungskette erstreckende, Traversen aufweisen, wobei in einem gestreckten Zustand der Energieführungskette die in einer gemeinsamen Ebene liegenden Traversen der benachbarten Kettenglieder voneinander beabstandet sind und diese Traversen in einen gekrümmten Bereich der Energieführungskette aneinander liegen.

Nach einer noch weiteren vorteilhaften Ausgestaltung der Erfindung wird vorgeschlagen, daß die Energieführungskette wenigstens eine Traverse aufweist, die mit ihrem einem Ende lösbar mit einer Kettenlasche verbindbar ist. Das andere Ende der Traverse ist vorteilhafterweise durch ein Filmscharnier mit der Kettenlasche verbunden. Die Kettenlasche, das Filmscharnier und die Traverse können einstückig ausgebildet sein.

Insbesondere wird vorgeschlagen, daß im Bereich des Filmscharniers die Traverse wenigstens einen Vorsprung aufweist, so daß in einer geschlossenen Stellung der Traverse der Vorsprung an einem Rand der Kettenlasche aufliegt. Hierdurch wird eine Entlastung des Filmscharniers erreicht, wenn die Traverse die geschlossene Stellung eingenommen hat und auf die Traverse eine Kraft in Richtung eines Kanalabschnittes ausgeübt wird. Hier wird die Kraft durch den Vorsprung aufgenommen, so daß das Filmscharnier im wesentlichen belastungsfrei gehalten ist. Gemäß einer noch weiteren vorteilhaften Ausgestaltung wird vorgeschlagen, daß die Traverse einen Deckel bildet.

Zur Begrenzung des Verschwenkwinkels benachbarter Kettenlaschen um eine im wesentlichen quer zur Längsrichtung der Energieführungskette verlaufenden Achse wird vorgeschlagen, daß die Kettenlasche an einem Ende ein Anschlagelement und an dem anderen Ende eine Anschlagfläche aufweist, wobei die Anschlagfläche im wesentlichen parallel zu einer Mittelebene der Kettenlasche ausgebildet ist. Durch diese Ausgestaltung der Kettenlasche wird auch erreicht, daß bei einer seitlichen Verschwenkung benachbarter Kettenlaschen durch den Anschlag und die Anschlagfläche es zu keiner Verspannung der Kettenglieder bzw. der Kettenlaschen kommt.

Nach einem weiteren Gedanken wird eine Energieführungskette zum Führen von Leitungen zwischen einem ortsfesten und einem beweglichen Anschluß, mit gelenkig miteinander verbundenen Kettengliedern aus Kunststoff vorgeschlagen, wobei diese wenigstens ein Anschlußglied aufweist. Das Anschlußglied ist derart ausgebildet, daß dieses eine leichte Verbindbarkeit des Anschlußgliedes mit einem Anschlußpunkt bzw. mit einem Verbindungselement, welches am Anschlußpunkt befestigt ist, erzielt wird. Insbesondere ist das Anschlußglied so ausgebildet, daß dieses die Auslenkbarkeit der Energieführungskette unterstützt.

Die Energieführungskette mit wenigstens einem Anschlußglied zeichnet sich dadurch aus, daß das wenigstens eine Anschlußglied einen Grundkörper mit wenigstens einer Aufnahme, in die ein an einem Anschlußpunkt befestigtes Verbindungselement einbringbar ist, und ein mit dem Grundkörper zusammenwirkendes Verriegelungselement aufweist, durch welches das Verbindungselement mit einem Grundkörper verriegelbar ist.

Konkreter wird vorgeschlagen, daß die Aufnahme durch eine Wandung begrenzt ist, die an einem Boden angeformt und wenigstens teilweise federelastisch ausgebildet ist und die Wandung mit dem Verbindungselement eine Schnappverbindung bildet. Durch diese Ausgestaltung des Anschlußgliedes in Verbindung mit dem Verbindungselement, welches an einem Anschlußpunkt befestigt ist, wird die Verbindung zwischen dem Anschlußglied und dem Verbindungselement erleichtert.

Nach einer weiteren vorteilhaften Ausgestaltung. der Energieführungskette wird vorgeschlagen, daß die Wandung durch wenigstens zwei Wandsektoren gebildet ist, die durch Schlitze voneinander getrennt sind. Vorzugsweise ist die Wandung durch vier Wandsektoren gebildet, wobei zwei gegenüberliegende Wandsektoren im wesentlichen starr und die beiden weiteren gegenüberliegenden Wandsektoren im wesentlichen federelastisch ausgebildet sind. Die im wesentlichen federelastisch ausgebildeten Wandsektoren weisen vorzugsweise entsprechende Ausnehmungen oder Vorsprünge auf, die mit einem entsprechend ausgebildeten Verbindungselement eine Schnappverbindung ausbilden. Der Abstand der weiteren Wandsektoren kann größer sein als die lichte Breite des Verbindungselementes, so daß lediglich die federelastisch ausgebildeten Wandsektoren eine Verbindung zwischen dem Anschlußglied und dem Verbindungselement herstellen.

Nach noch einer weiteren vorteilhaften Ausgestaltung der Energiefuhrungskette wird vorgeschlagen, daß das Verriegelungselement verschieblich mit dem Grundkörper verbunden ist, so daß das Verriegelungselement in einer Verriegelungsstellung die Auslenkbarkeit der Wandung wenigstens behindert und einer anderen Stellung freigibt. Durch diese vorteilhafte Ausgestaltung und Weiterbildung der Energieführungskette wird erreicht, daß die Anbringung des Anschlußgliedes an einem Verbindungselement relativ einfach und mit einer sehr geringen Kraft erreicht werden kann, da lediglich die federelastischen Wandsektoren auseinander gedrückt werden müssen. Eine Verriegelung wird durch das Verriegelungselement erreicht.

Um eine leichte und zuverlässige Verriegelung zu erreichen, wird nach einer vorteilhaften Ausgestaltung der Energieführungskette vorgeschlagen, daß das Verriegelungselement im wesentlichen U-förmig ausgebildet ist, wobei in der Verriegelungsstellung die freien Schenkel des Verriegelungselementes wenigstens teilweise an der Wandung, insbesondere an den federnden Wandsektoren anliegen, so daß ein Auseinanderfedern der Wandsektoren verhindert wird.

Es wird vorgeschlagen, daß der Grundkörper des Anschlußgliedes eine Einschuböffnung aufweist, in der das Verriegelungselement verschieblich gehaltert ist, wobei in der Verriegelungsstellung die freien Schenkel teilweise an der Wandung, insbesondere an den federnden Wandsektoren und den Seitenflächen der Einschuböffnung anliegen. Hierdurch wird sichergestellt, daß auch bei relativ hohen Abzugskräften die Verriegelung sichergestellt bleibt, da die freien Schenkel des Verriegelungselementes durch die Seitenwände der Einschuböffnung in ihrer Bewegungsfreiheit eingeschränkt sind.

Um sicherzustellen, daß eine Verriegelung des Anschlußgliedes mit dem Verbindungselement lediglich dann ermöglicht wird, wenn die Verbindung zwischen dem Anschlußglied und dem Verbindungselement ordnungsgemäß hergestellt worden ist, wird nach einer noch weiteren vorteilhaften Ausgestaltung der Energieführungskette vorgeschlagen, daß das Verriegelungselement eine Sicherungslasche aufweist, die beabstandet zu den Schenkeln und im wesentlichen parallel zu diesen ausgebildet ist, wobei das Verriegelungselement lediglich dann in die Verriegelungsstellung bringbar ist, wenn die Sicherungslasche durch das Verbindungselement freigegeben wird.

Hierzu wird in vorteilhafter Weise vorgeschlagen, daß der Grundkörper eine Nase aufweist, die in die Bewegungsebene der Sicherungslasche hineinragt. Die Sicherungslasche hat eine Öffnung, in die die Nase in der Verriegelungsstellung eingreift, wobei die Sicherungslasche durch das Verbindungselement so auslenkbar ist, daß diese in die Verriegelungsstellung bringbar ist.

Um ein selbsttätiges Lösen der Verriegelung zu verhindern, wird vorgeschlagen, daß die Nase und die Öffnung eine aneinander angepaßte Form haben, so daß eine Bewegung der Sicherungslasche verhindert wird.

Nach noch einer weiteren vorteilhaften Ausgestaltung der Energieführungskette wird vorgeschlagen, daß die Aufnahme den Grundkörper vollständig durchdringt. Insbesondere wird vorgeschlagen, daß die Aufnahme und das Verbindungselement rotationssymmetrisch ausgebildet sind. Hierdurch wird eine Verschwenkbarkeit des Anschlußgliedes zugelassen.

Weitere Einzelheiten und Vorteile der erfindungsgemäßen Energieführungskette werden anhand der in der Zeichnung dargestellten Ausführungsbeispiele erläutert. Es zeigen:
- Fig. 1: ein erstes Ausführungsbeispiel eines Kettengliedes in einer Vorderansicht und im Vollschnitt,
- Fig. 2: das Kettenglied nach Fig. 1 in einer Unteransicht,
- Fig. 3: das Kettenglied nach Fig. 1 in einer Draufsicht,
- Fig. 4: einen Teilabschnitt einer Energieführungskette mit Kettengliedern nach Fig. 1 in einer Draufsicht,
- Fig. 5: einen Teilabschnitt einer Energieführungskette mit Kettengliedern nach Fig. 1 in einer Vorderansicht und im Vollschnitt,
- Fig.6: vergrößert eine Gelenkverbindung zwischen benachbarten Kettengliedern in einer Vorderansicht,
- Fig. 7: die Gelenkverbindung nach Fig. 6 im Schnitt und in einer Draufsicht,
- Fig. 8: ein weiteres Ausführungsbeispiel eines Kettengliedes in einer Unteransicht,
- Fig. 9: das Kettenglied nach Fig. 8 in einer Vorderansicht und im Vollschnitt,
- Fig. 10: das Kettenglied nach Fig. 8 in einer Draufsicht,
- Fig. 11: einen Teilabschnitt einer Energieführungskette mit Kettengliedern nach Fig. 8 in einer Draufsicht,
- Fig. 12: die Energieführungskette nach Fig. 11 im Vollschnitt und in einer Vorderansicht.
- Fig. 13: eine weitere Ausführungsform eines Kettengliedes in einer Vorderansicht,
- Fig. 14: das Kettenglied nach Fig. 13 in einer Seitenansicht von rechts,
- Fig. 15: das Kettenglied nach Fig. 13 im Querschnitt,
- Fig. 16: das Kettenglied nach Fig. 13 im Querschnitt mit geschlossener Traverse,
- Fig. 17: das Kettenglied nach Fig. 13 im Längsschnitt,
- Fig. 18: die Grundform eines Anschlußgliedes in einer Vorderansicht,
- Fig. 19: das Anschlußglied im Schnitt entlang der Linie A - A nach Fig. 18,
- Fig. 20: das Anschlußglied in einer Schnittdarstellung entlang der Schnittlinie B - B nach Fig. 19,
- Fig. 21: eine Schnittdarstellung des Anschlußgliedes nach Fig. 18 entlang der Schnittlinie C - C nach Fig. 19,
- Fig. 22: eine Vorderansicht eines Verriegelungselementes für ein Anschlußglied nach Fig. 18,
- Fig. 23: das Verriegelungselement in einer Draufsicht,
- Fig. 24: das Verriegelungselement in einer Unteransicht,
- Fig. 25: das Verriegelungselement in einer Schnittdarstellung entlang der Schnittlinie C - C der Fig. 23,
- Fig. 26: das Verriegelungselement in einer Schnittdarstellung entlang der Schnittlinie A - A nach Fig. 25,
- Fig. 27: das Verriegelungselement in einer Schnittdarstellung entlang der Schnittlinie B - B,
- Fig. 28: das Anschlußglied nach Fig. 18 mit einem Verriegelungselement nach Fig. 22 in einer Montagestellung und im Schnitt,
- Fig. 29: das Anschlußglied mit dem Verriegelungselement nach Fig. 28 in einer Schnittdarstellung entlang der Schnittlinie A - A nach Fig. 28,
- Fig.30: das Anschlußglied mit dem Verriegelungselement in einer Schnittdarstellung entlang der Schnittlinie B - B nach Fig. 28,
- Fig.31: das Anschlußglied mit dem Verriegelungselement in einer Schnittdarstellung mit ausgelenkter Sicherungslasche,
- Fig.32: das Anschlußglied mit dem Verriegelungselement in einer Endstellung des Verriegelungselementes,
- Fig.33: das Anschlußglied mit dem Verriegelungselement in einer Schnittdarstellung entlang der Schnittlinie A - A nach Fig. 32 und
- Fig. 34: das Anschlußglied mit dem Verriegelungselement in einer Schnittdarstellung entlang der Schnittlinie B - B nach Fig. 32.

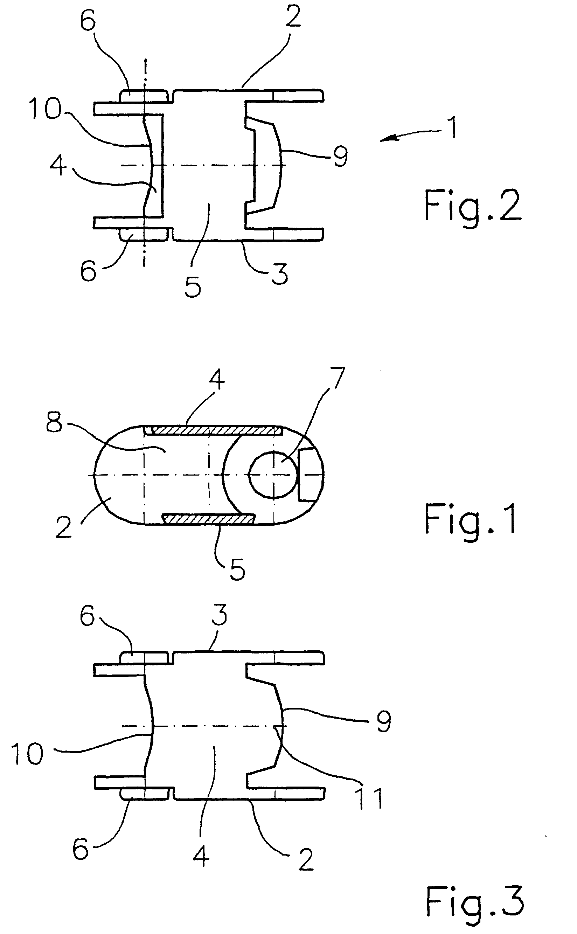

Fig. 1 bis 3 zeigen ein erstes Ausführungsbeispiel eines Kettengliedes 1 für eine Energieführungskette zum Führen von Leitungen. Das Kettenglied 1 weist zwei voneinander beabstandete einander gegenüberliegende, sich in einer Längsrichtung der Energieführungskette erstreckende, Kettenlaschen 2, 3 auf.

Jede Kettenlasche 2, 3 weist einen Gelenkkörper 6 und eine Gelenkaufnahme 7 auf Der Gelenkkörper 6 ist an einer Außenseite der Kettenlasche 2 bzw. 3 ausgebildet. Der Gelenkkörper 6 und die Gelenkaufnahme 7 verlaufen im wesentlichen quer zur Längsrichtung der Energieführungskette. Der Gelenkkörper 6 und die Gelenkaufnahme 7 sind im Abstand zueinander in Längsrichtung der Kettenlasche betrachtet, ausgebildet.

Die Kettenlaschen 2, 3 sind miteinander durch Traversen 4, 5 verbunden. Die Traversen 4, 5 sind im Abstand zueinander ausgebildet. Die Traversen 4, 5 sowie die Kettenlaschen 2, 3 begrenzen einen Kanalabschnitt 8, in dem Leitungen anordenbar sind. Jede Traverse 4, 5 fluchtet im wesentlichen mit einem Längsrand der Kettenlasche 2 bzw. 3.

Die Traverse 4 weist einen konvex gekrümmten Abschnitt 9 auf. Der konvex gekrümmte Abschnitt 9 liegt in einer im wesentlichen quer zur Kettenlasche 2 bzw. 3 verlaufenden Ebene. Die Traverse 4 weist einen Bereich 10 auf, der korrespondierend zum konvex gekrümmten Abschnitt 9 ausgebildet ist. Der Bereich 10 liegt dem Abschnitt 9 gegenüber. Der Abschnitt 9 und der Bereich 10 sind symmetrisch bezüglich einer im wesentlichen parallel zur Längsachse der Energieführungskette verlaufenden Achse 11 ausgebildet.

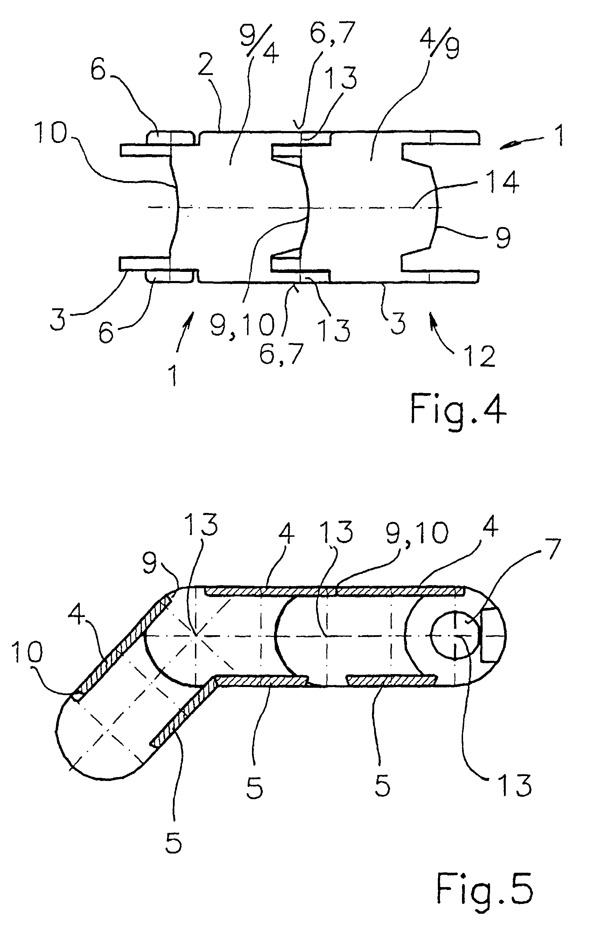

In den Figuren 4 und 5 ist ein erstes Ausführungsbeispiel einer erfindungsgemäßen Energieführungskette 12 dargestellt. Die Energieführungskette 12 ist durch Kettenglieder 1 gebildet. Die Ausgestaltung eines jeden Kettengliedes 1 entspricht der Ausgestaltung des in den Figuren 1 bis 3 dargestellten Kettengliedes.

Die Kettenglieder 1 sind gelenkig miteinander verbunden. Die Gelenkverbindung erfolgt über die Gelenkkörper 6, die in die Gelenkaufnahmen 7 eingreifen.

Benachbarte Kettenglieder 1 sind jeweils um die im wesentlichen senkrecht zur Längsachse 14 verlaufende Gelenkachse 13 verschwenkbar. Wie aus der Fig. 4 ersichtlich ist, liegt der Bereich 10 der Traverse 4 am konvex gekrümmt ausgebildeten Abschnitt 9 der Traverse 4 eines benachbarten Kettengliedes an. Die Traversen 4 sind so ausgebildet, daß diese in Längsrichtung der Energieführungskette 12 betrachtet eine Erstreckung haben, die größer ist als der Abstand zwischen zwei äußeren Gelenkachsen 13 zweier Kettenglieder. Hierdurch erhält die Energieführungskette 12 eine Vorspannung.

In der Fig. 5 ist dargestellt, daß die Traversen 5 benachbarter Kettenglieder mit ihren jeweiligen Stirnflächen zur Anlage bringbar sind, so daß die Traversen 5 den Krümmungsradius der Energieführungskette begrenzen.

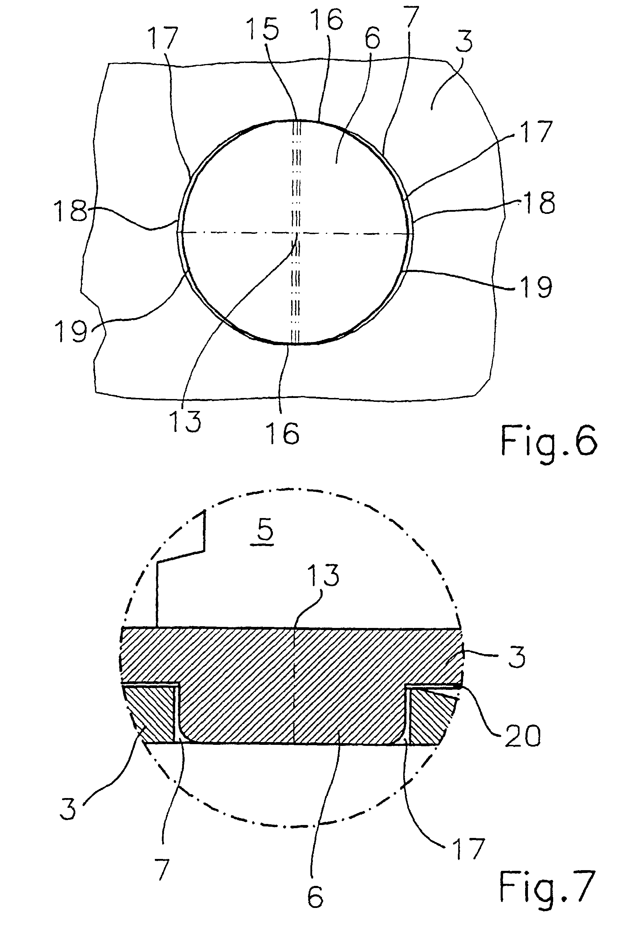

Die Gelenkverbindung benachbarter Kettenglieder erfolgt durch Gelenkkörper 6 und Gelenkaufnahmen 7. Die Gelenkverbindung benachbarter Kettenglieder ist vergrößert in den Figuren 6 und 7 dargestellt.

Jeder Gelenkkörper 6 ist im wesentlichen zylinderförmig ausgebildet. Die Gelenkaufnahme 7 weist einen im wesentlichen ovalen Querschnitt auf. Der Gelenkkörper 6 und die Gelenkaufnahme 7 weisen jeweils einen Mantelabschnitt auf, die einen gemeinsamen Verbindungsbereich 16 bilden. Der Verbindungsbereich 16 erstreckt sich im wesentlichen in Längsrichtung der Kettenlaschen 3. In dem zwischen den diametral gegenüberliegenden Verbindungsbereichen 16 ist zwischen einem Außenmantelbereich 18 der Gelenkaufnahme 7 und einem Innenmantelbereich 19 ein Spalt 17 ausgebildet. Die Gelenkverbindung weist zwei im wesentlichen diametral gegenüberliegende Spalte 17 auf, die in dem dargestellten Ausführungsbeispiel sichelförmig sind. Sie erstrecken sich in Umfangsrichtung des Gelenkkörpers 6 betrachtet vom Verbindungsbereich 16 bis zum gegenüberliegend ausgebildeten Verbindungsbereich 16.

Durch den Spalt 17 zwischen dem Gelenkkörper 6 und der Gelenkaufnahme 7 wird eine Verschwenkbarkeit benachbarter Kettenglieder ermöglicht. Die Kettenglieder sind um eine Schwenkachse 15, die im wesentlichen senkrecht zur Gelenkachse 13 steht, verschwenkbar.

Zwischen den sich überlappenden Bereichen der Kettenlaschen 2, 3 benachbarter Kettenglieder ist jeweils ein Freiraum 20 ausgebildet, durch den eine Verschwenkbarkeit der benachbarten Kettenglieder um die Schwenkachse 15 ermöglicht wird. Während eines Verschwenkvorgangs um eine Schwenkachse 15 gleiten die Flächen des konvex gekrümmten Abschnitts 9 sowie des korrespondierend ausgebildeten Bereichs 10 aneinander.

Jedes Kettenglied 1 der Energieführungskette 12 ist um eine Gelenkachse 13 und um eine Schwenkachse 15 auslenkbar, so daß benachbarte Kettenglieder einer Energieführungskette begrenzt räumlich, d.h. in einem dreidimensionalen Raum, auslenkbar sind. Die Energieführungskette 12 kann vollständig oder abschnittsweise mit derart ausgebildeten Kettengliedern 1 ausgebildet sein.

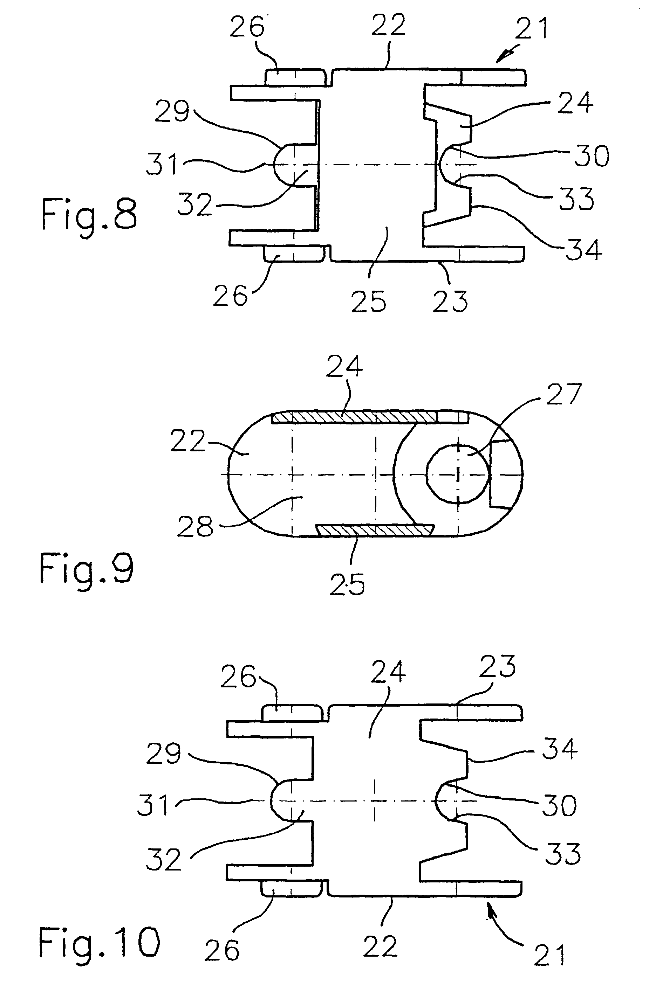

Fig. 8 bis 9 zeigen ein zweites Ausführungsbeispiel eines Kettengliedes 21. Das Kettenglied 21 weist zwei voneinander beabstandete einander gegenüberliegende, sich in einer Längsrichtung einer Energieführungskette erstreckende, Kettenlaschen 22, 23 auf. Jede Kettenlasche 22, 23 weist einen Gelenkkörper 26 und eine Gelenkaufnahme 27 auf. Der Gelenkkörper 26 und die Gelenkaufnahme 27 erstrecken sich im wesentlichen quer zur Längsrichtung einer Energieführungskette. Die Gelenkkörper 26 und die Gelenkaufnahme 27 der Kettenlaschen 22, 23 sind so ausgebildet, daß diese ineinander greifen, wenn die Kettenglieder 21 miteinander verbunden werden.

Jede Kettenlasche 22, 23 ist durch zwei Traversen 24, 25 miteinander verbunden. Die Traversen 25, 24 fluchten im wesentlichen mit einem Längsrand der Kettenlasche bzw. 23. Die Kettenlaschen 22, 23 und die Traversen 24, 25 begrenzen einen Kanalabschnitt 28.

Die Traverse 24 weist einen sich in Längsrichtung der Energieführungskette erstreckenden Fortsatz 32 auf. Der Fortsatz 32 weist einen im wesentlichen konvex gekrümmten Abschnitt 29 auf. Der Fortsatz 32 und der konvex gekrümmte Abschnitt 29 sind im wesentlichen symmetrisch bezüglich einer Achse 31 ausgebildet. Die Achse 31 verläuft im wesentlichen parallel zur Längsachse der Energieführungskette.

Die Traverse 24 weist einen konkav gekrümmten Bereich 30 auf, der dem konvex gekrümmten Abschnitt 29 gegenüberliegend ausgebildet ist. Der Bereich 30 ist korrespondierend zum Abschnitt 29 ausgebildet. Der Bereich 30 ist in einer Ausnehmung 33 ausgebildet. Die Ausnehmung 33 erstreckt sich von einer Stirnfläche 34 einwärts in die Traverse 24 und in Richtung der Achse 31. Die Ausnehmung 33 verjüngt sich von der Stirnfläche 34 in Richtung des Bereichs 30.

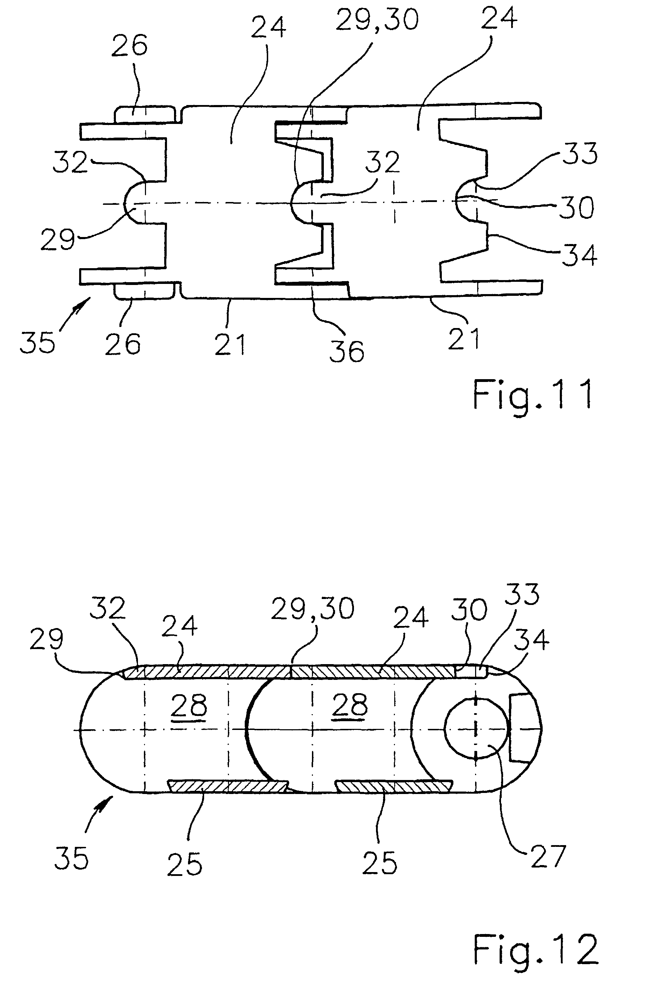

Fig. 11 und 12 zeigen einen Abschnitt einer Energieführungskette 35, die durch Kettenglieder 21 aufgebaut ist. Die benachbarten Kettenglieder 21 sind jeweils um eine Gelenkachse 36 auslenkbar. Die Gelenkachse 36 ist durch die Paarung Gelenkkörper 26 und Gelenkaufnahme 27 gebildet. Wie insbesondere aus der Fig. 11 ersichtlich ist, greift der Fortsatz 32 mit dem konvex gekrümmten Abschnitt 29 in die Ausnehmung 33 mit dem konkav gekrümmten Abschnitt 30 ein. Die Traversen 24 sowie die Fortsätze 32 und die Ausnehmungen 33 sind so ausgebildet, daß die Energieführungskette 35 mit einer Vorspannung versehen ist. Dies ist nicht zwingend notwendig.

Der Krümmungsradius wird durch die durch die Traversen 25 gebildeten Anschläge begrenzt.

Der Gelenkkörper 26 sowie die Gelenkaufnahme 27 der Kettenglieder ist ausgebildet wie beim Kettenglied 1. Es wird daher auf die Ausführungen zu den Figuren 6 und 7 verwiesen.

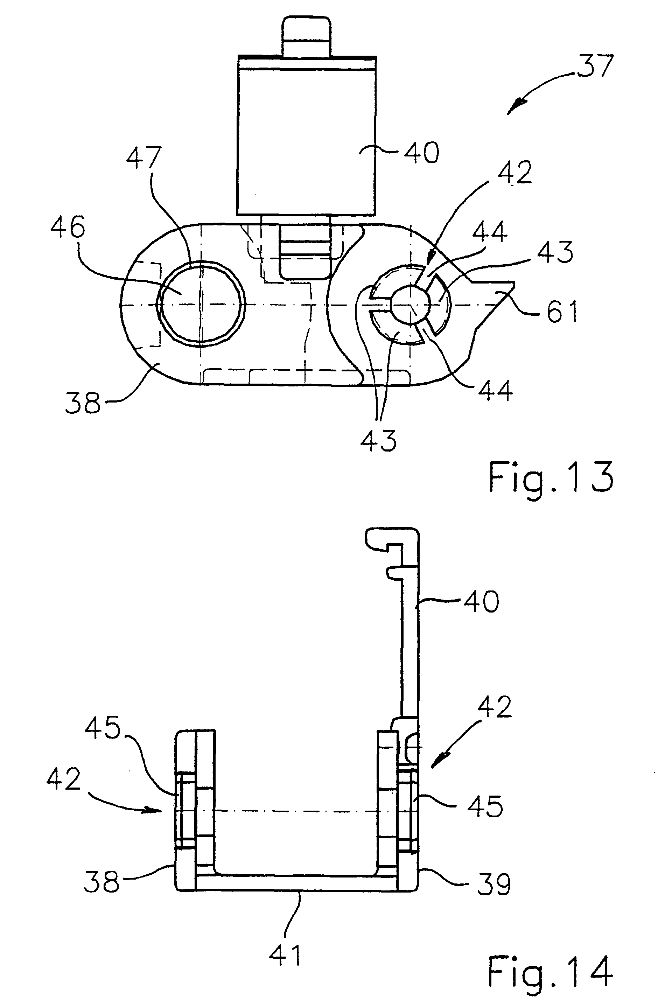

Figuren 13 bis 17 zeigen ein weiteres Ausführungsbeispiel eines Kettengliedes 37 aus Kunststoff für eine Energieführungskette zum Führen von Leitungen. Das Kettenglied 37 ist einstückig aus einem Kunststoff hergestellt, insbesondere gespritzt.

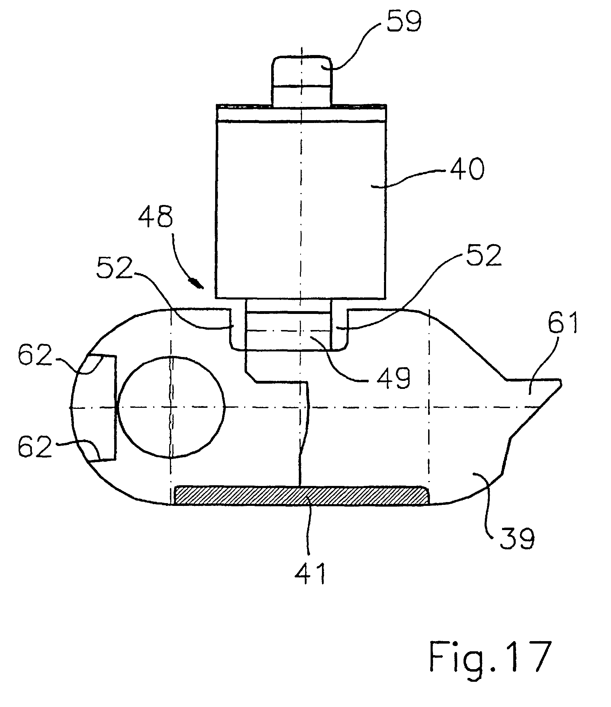

Das Kettenglied 37 weist zwei voneinander beabstandete einander gegenüberliegende, sich in einer Längsrichtung der Energieführungskette erstreckende, Kettenlaschen 38, 39 auf. Die Kettenlaschen sind durch eine Traverse 41 miteinander verbunden. Sie bilden gemeinsam mit der Traverse 41 eine U-förmige Grundform des Kettengliedes 37. Wie insbesondere aus der Fig. 17 ersichtlich ist, erstreckt sich die Traverse 41 bis in die Überlappungsbereiche der Kettenlaschen, so daß die Traverse 41 einen Deckel bildet.

Jede Kettenlasche 38, 39 weist einen Gelenkkörper 42 und eine Gelenkaufnahme 46 auf.

Der Gelenkkörper 42 ist an einer Außenseite der Kettenlasche 38 bzw. 39 ausgebildet, wie dies in der Fig. 14 dargestellt ist. Der Gelenkkörper 42 ist aus durch Schlitze 44 voneinander getrennten Gelenkkörpersegmenten 43 gebildet. An seinem freien Endabschnitt weist der Gelenkkörper 42 einen radial auswärts gerichteten Kragen 45 auf Auch der Kragen 45 ist durch die Schlitze 44 unterteilt. In dem dargestellten Ausführungsbeispiel sind jeweils um 120 °C zueinander versetzte Schlitze 44 vorgesehen.

Die Gelenkkörper 42 sind in Endbereichen der Kettenlaschen 38, 39 ausgebildet. An den gegenüberliegenden Endbereichen der Kettenlaschen 38, 39 sind die Gelenkaufnahmen 46 vorgesehen. Die Gelenkaufnahmen 46 weisen einen im wesentlichen elliptischen Querschnitt auf, so daß die Gelenkkörper in den entsprechenden Gelenkaufnahmen verschwenkbar sind, so daß benachbarte Kettenglieder 37 seitlich zueinander auslenkbar sind.

Die Gelenkaufnahme 46 weist eine umlaufende Vertiefung 47 auf. Diese Vertiefung ist im wesentlichen koaxial zu der Gelenkaufnahme 46 ausgebildet. Die Tiefe Gelenkaufnahme entspricht im wesentlichen der Dicke des Kragens 45.

Mit der Gelenklasche 39 ist eine Traverse 40 gelenkig verbunden. Diese Traverse ist mit ihrem gegenüberliegenden Ende lösbar mit der Kettenlasche 38 verbindbar. Die Verbindung der Traverse 40 mit der Kettenlasche 39 ist durch ein Filmscharnier 48 gebildet. Das Filmscharnier 48, die Kettenlasche 39 und die Traverse 40 sind einstückig ausgebildet.

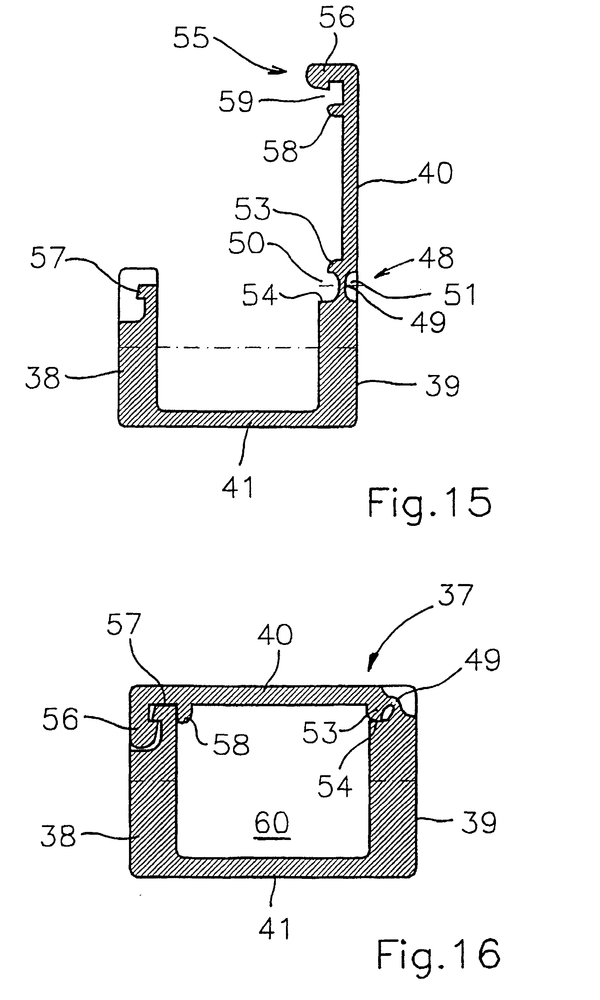

Das Filmscharnier 48 ist an einem Randbereich der Kettenlasche 39 ausgebildet. Beiderseits des Filmscharniers 48 sind Spalte 52 vorgesehen, wie dies die Fig. 17 zeigt. Das Filmscharnier ist durch einen Filmsteg 49 gebildet, welches an einem Ende mit der Kettenlasche 39 und anderen Enden mit der Traverse 40 verbunden ist. Die Dicke des Filmstegs 49 ist wesentlich kleiner als die Dicke der Kettenlasche 39. Zur Ausbildung des Filmstegs 49 sind in dem Randbereich der Kettenlasche 39 quer und in Längsrichtung der Kettenlasche 39, Ausnehmungen 50, 51 vorgesehen, wie dies in der Fig. 15 dargestellt ist.

Im Bereich des Filmscharniers 48 weist die Traverse 40 einen sich quer zur Längsrichtung der Traverse erstreckenden Vorsprung 53 auf. Im geschlossenen Zustand des Kettengliedes 37 liegt der Vorsprung 53 auf dem Rand 54 der Ausnehmung 50, wie in der Fig. 16 dargestellt ist. Hierdurch wird eine Entlastung des Filmscharniers 48 und somit eine Entlastung des Filmstegs 49 erreicht, wenn eine Kraft auf die Traverse 40 und in Richtung der Traverse 41 ausgeübt wird.

An dem dem Filmscharnier 48 gegenüberliegenden Endbereich der Traverse 40 ist ein Sperrelement 55 ausgebildet. Das Sperrelement 55 ist durch einen Haken 56 gebildet. Der Haken 56 wirkt mit einem Gegenhaken 57, der in einer Freiarbeitung des Randbereichs der Kettenlasche 58 ausgebildet ist. Beabstandet zum Haken 56 ist ein Steg 58 vorgesehen, der gemeinsam mit dem Haken 56 einen Raum 59 begrenzt, in den der Gegenhaken 57 eingreift. Der Steg 58 liegt mit seiner einen Fläche an der Innenfläche der Kettenlasche 38 an, wie dies aus der Fig. 16 ersichtlich ist. Durch den Steg 58 wird eine Beweglichkeit und somit eine Beanspruchung des Filmscharniers 48 wenigstens reduziert, wenn nicht gar ganz vermieden, da eine Bewegung der Traverse 40 in Längsrichtung dieser unterbunden wird.

Die Kettenlaschen 38, 39 und die Traversen 40, 41 begrenzen einen Kanalabschnitt 60, in dem Leitungen, insbesondere elektrische Leitungen verlegt werden können.

Zur Begrenzung des Verschwenkwinkels benachbarter Kettenglieder um eine quer zur Längsrichtung der Energieführungskette verlaufenden Achse weist vorzugsweise jede Kettenlasche an einem Ende ein Anschlagelement 61 auf. Am gegenüberliegenden Ende der Kettenlasche sind Anschlagflächen 62 vorgesehen. Die Anschlagelemente 61 wirken mit den Anschlagflächen 62 eines benachbarten Kettengliedes zusammen. Die Anschlagflächen 62 sind in einer im wesentlichen parallel zu einer Mittelebene der Kettenlasche verlaufenden Ebene ausgebildet. Vorzugsweise sind die Anschlagflächen äquidistant zur Mittelebene ausgebildet. Auch das Anschlagelement 61 ist im Bereich der Mittelebene der Kettenlasche ausgebildet.

Zur Festlegung einer Energieführungskette an einem ortsfesten und/oder einem beweglichen Anschluß weist die Energieführungskette Anschlußglieder auf.

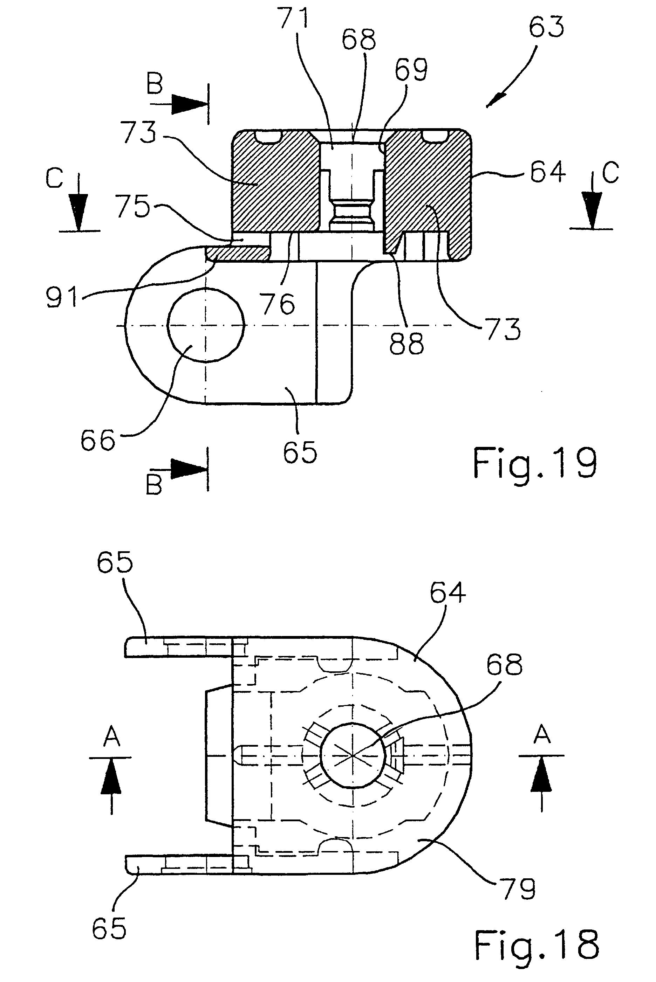

In den Figuren 18 bis 21 ist die Ausgestaltung einer bevorzugten Ausführungsform eines Anschlußgliedes 63 dargestellt. Das Anschlußglied 63 ist durch einen Grundkörper 64 gebildet. Mit dem Grundkörper 64 sind zwei Laschen 65 verbunden. Die Laschen 65 sind voneinander beabstandet und einander gegenüberliegend ausgebildet. Jede Kettenlasche 65 weist eine Gelenkaufnahme 66 auf. Die Gelenkaufnahme 66 weist an den außenliegenden Seitenflächen der Laschen 65 Vertiefungen 67 auf.

Die Ausgestaltung der Gelenkaufnahmen 66 entspricht der Ausgestaltung der Gelenkaufnahmen der vorstehend dargestellten Kettenglieder, so daß das Anschlußglied 63 mit den entsprechenden Gelenkkörpern verbindbar ist. Dies ist nicht zwingend. In Abhängigkeit davon, an welchem Ende einer Energieführungskette das Anschlußglied vorgesehen sein soll, kann das Anschlußglied auch mit entsprechenden Gelenkkörper versehen sein, die in die entsprechenden Gelenkaufnahmen einbringbar sind.

In dem Grundkörper 63 ist eine Aufnahme 68 vorgesehen, in die ein nicht dargestelltes Verbindungselement einbringbar ist. Das Verbindungselement ist an einem Anschlußpunkt befestigt. In dem dargestellten Ausführungsbeispiel ist die Aufnahme 68 quer zur Längsachse einer Energieführungskette ausgebildet. Dies ist nicht zwingend notwendig. Die Gelenkaufnahme kann auch parallel zur Längsachse der Energieführungskette ausgebildet sein. Sie kann auch die Längsachse der Energieführungskette unter einem Winkel schneiden.

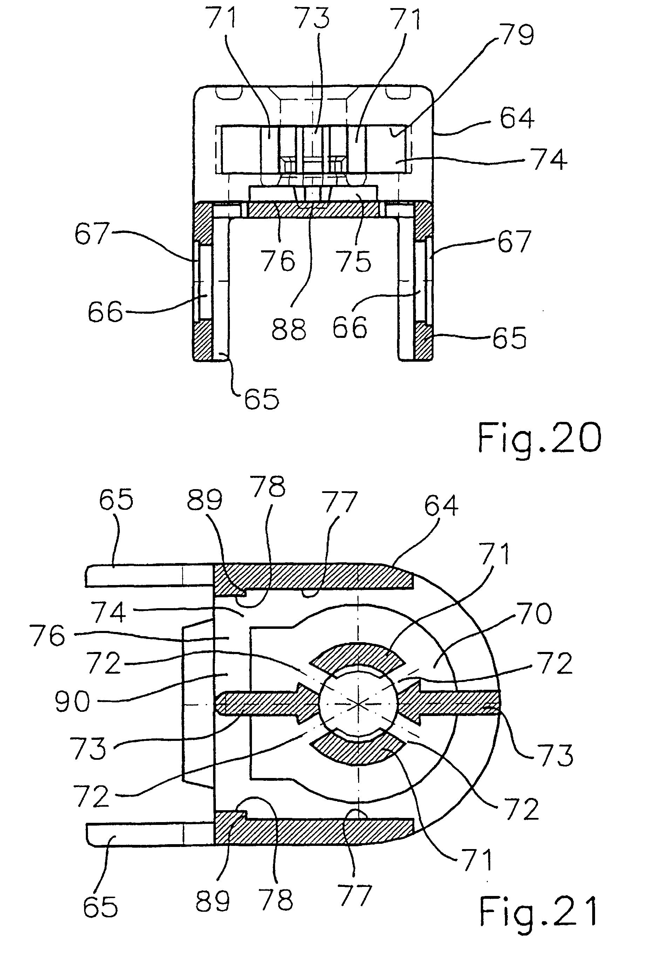

Die Aufnahme 68 ist durch eine Wandung 69 begrenzt. Die Wandung 69 erstreckt sich von einer Bodenwand 70 zu einer Deckwand 79. Die Wandung 69 ist an der Bodenwand 70 angeformt. Die Wandung 69 ist durch Wandsektoren 71, 73 gebildet. In dem dargestellten Ausführungsbeispiel sind vier Wandsektoren vorgesehen. Die Wandsektoren sind durch Schlitze 72 voneinander getrennt, wie dies in der Fig. 21 dargestellt ist. Die gegenüberliegenden Wandsektoren 71 sind federelastisch ausgebildet, so daß diese mit dem nicht dargestellten Verbindungselement eine Schnappverbindung bilden. Die Wandsektoren 73 sind im wesentlichen starr ausgebildet.

Innerhalb des Grundkörpers 64 ist eine Einschuböffnung 74 vorgesehen. Diese Einschuböffnung 74 verläuft im wesentlichen quer zur Längsrichtung der Aufnahme 68. Die Einschuböffnung 74 ist durch die Bodenwand 70, die Deckwand 79 und die Seitenwände 77 begrenzt. Die Seitenwände 77 weisen im Bereich der Eintrittsöffnung 90 in der Einschuböffnung 74 Vorsprünge 78 auf. Die Vorsprünge 78 sind zueinander gerichtet. Die lichte Breite der Eintrittsöffnung 90 ist kleiner als der lichte Abstand zwischen den Seitenwänden 77, so daß im Übergangsbereich zwischen dem Vorsprung 78 und der Seitenwand 77 eine Anschlagfläche 89 gebildet ist, wie dies aus der Fig. 21 ersichtlich ist.

Die Aufnahme 68 erstreckt sich durch die Bodenwand 70 hindurch. Benachbart zu der Aufnahme 68 ist eine Nase 88 vorgesehen. Diese Nase 88 erstreckt sich von der Bodenwand 70 des Grundkörpers 64 weg.

Unterhalb der Bodenwand 70 ist eine Einschubtasche 75 vorgesehen. Die Einschubtasche 75 ist begrenzt durch die Bodenwand 70 und einen Steg 76. Der Steg 76 erstreckt sich lediglich über einen Teil der Bodenwand 70, so daß die Aufnahme 68 freigegeben ist.

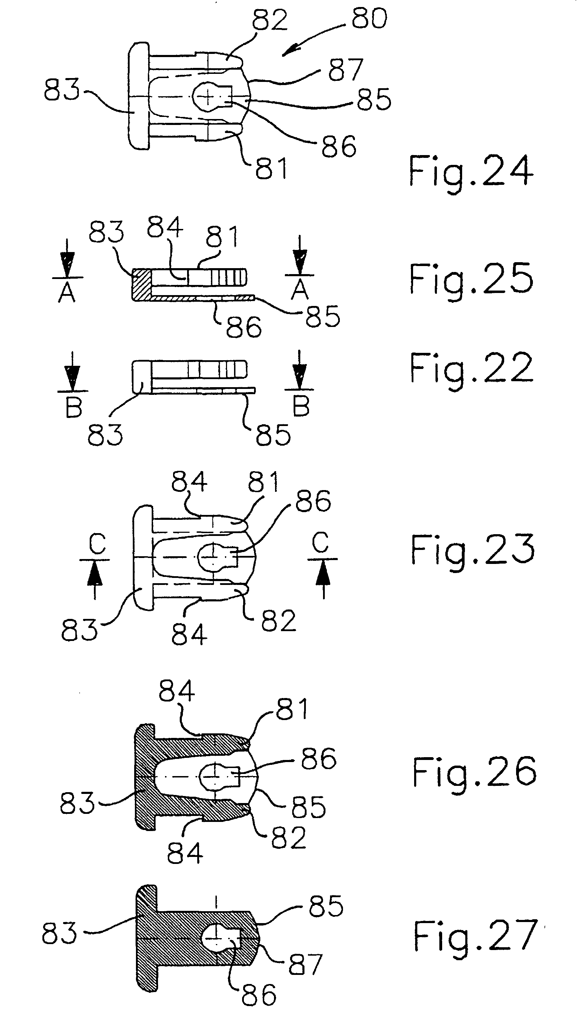

In den Figuren 22 bis 27 ist ein Verriegelungselement 80 dargestellt. Das Verriegelungselement 80 wirkt mit dem Grundkörper 64 des Anschlußgliedes 63 zusammen, wie noch im weiteren erläutert wird.

Das Verriegelungselement 80 weist eine im wesentlichen U-förmige Gestalt auf. Es hat zwei freie Schenkel 81, 82, die durch eine gemeinsame Basis 83 miteinander verbunden sind. Die freien Schenkel 81, 82 sind federelastisch ausgebildet. Jeder Schenkel 81, 82 weist an seiner Außenfläche jeweils einen Anschlag 84 auf, der durch eine im wesentlichen parallel zur Basis 83 verlaufende Fläche gebildet ist. Der Abstand der innenliegenden Seitenflächen der Schenkel 81, 82 entspricht im wesentlichen der Außenbreite der Wandung 68.

Beabstandet zu den freien Schenkeln 81, 82 und im wesentlichen parallel zu diesen ist eine Sicherungslasche 85 vorgesehen. Die Lasche 85 weist eine Öffnung 86 auf. Die Öffnung 86 ist im Bereich der freien Stirnfläche 87 vorgesehen.

Das Verriegelungselement 80 ist so ausgebildet, daß die freien Schenkel 81, 82 in die Einschuböffnung 74 einbringbar sind. Die Sicherungslasche 85 ist in die Einschubtasche 75 des Grundkörpers 64 einbringbar.

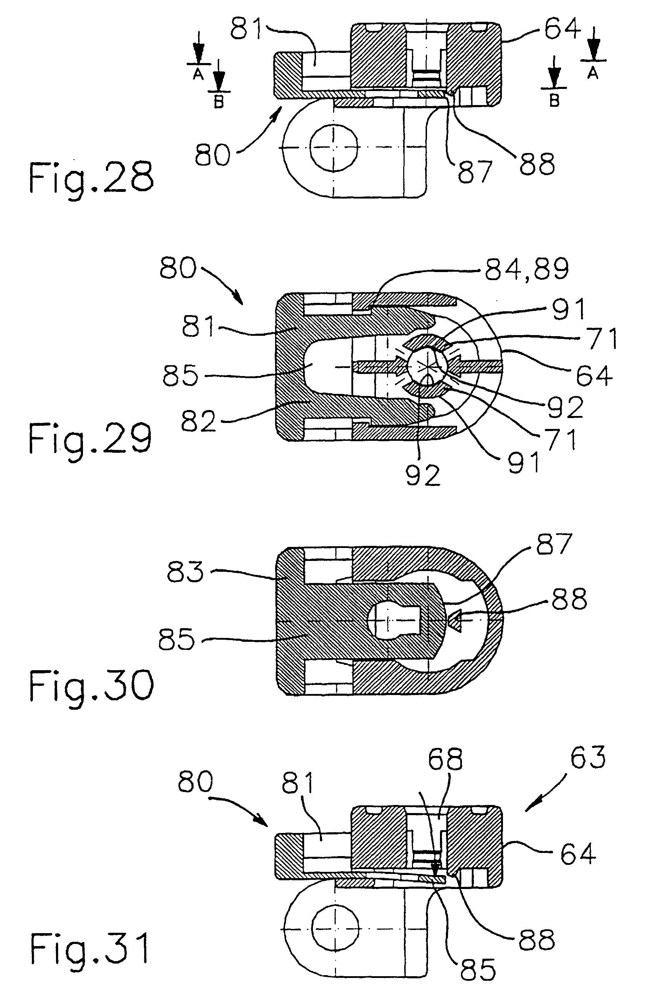

Die Figuren 28 bis 31 zeigen das Anschlußglied mit dem Verriegelungselement 80 in einer Montagestellung. Die freien Schenkel 81, 82 sind in die Einschuböffnung eingebracht. Diese liegen nicht an der Außenfläche der Wand sektoren 71, so daß die Wandsektoren 71 radial auswärts schwenkbar sind. Die Wandsektoren 71 können an den Innenflächen 92 Vertiefungen und/oder Vorsprünge aufweisen, die mit entsprechend ausgebildeten Vorsprüngen bzw. Vertiefungen eines nicht dargestellten Verbindungselementes, das in die Aufnahme 68 einbringbar ist.

Wie aus der Fig. 28 und aus der Fig. 30 ersichtlich ist, liegt die Stirnfläche 87 der Sicherungslasche 85 an der Nase 88 an. Die Nase 88 begrenzt den Verschiebeweg des Verriegelungselementes 80 quer zur Aufnahme 64.

Das Verriegelungselement 80 ist unverlierbar mit dem Grundkörper 64 verbunden. Hierzu sind die Anschlagflächen 84, 89 vorgesehen. Die Flächen 84, 89 begrenzen die Bewegbarkeit des Verriegelungselementes 80, so daß das Verriegelungselement 80, ohne daß die freien Schenkel 81, 82 zusammengedrückt werden, nicht aus der Einschuböffnung 74 herausnehmbar ist.

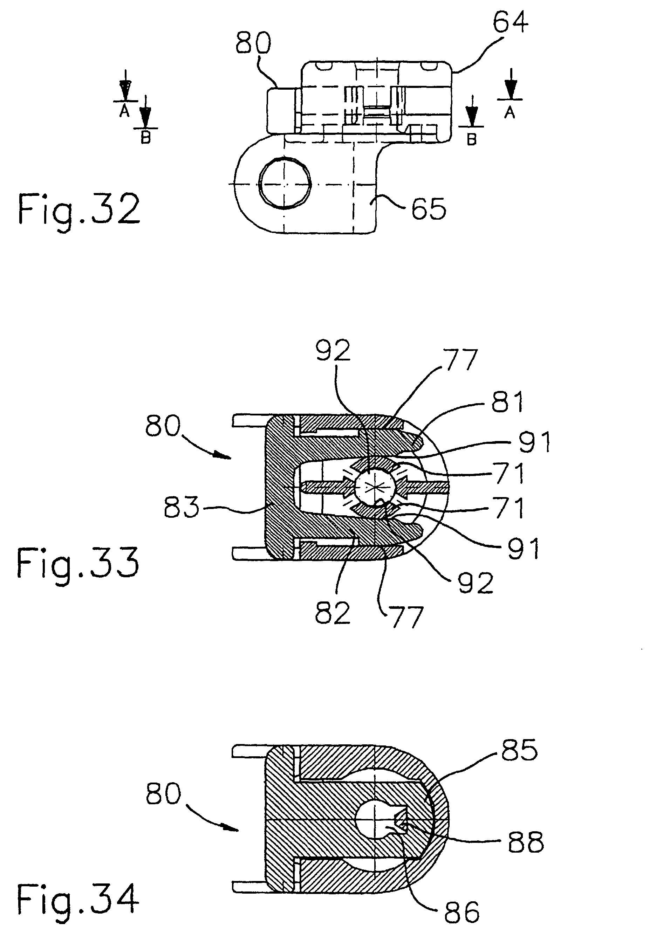

Wird das Anschlußglied 63 mit einem nicht dargestellten Verbindungselement verbunden, so greift das Verbindungselement in die Öffnung 68 ein. Um ein Lösen des Anschlußgliedes 63 von dem Verbindungselement zu verhindern, entsteht zwischen den Wandungen 71 und dem Verbindungselement eine Rastverbindung. Um diese Rastverbindung zu blockieren, wird das Verriegelungselement 80 weiter in die Einschuböffnung 74 eingeschoben, bis dieses die in den Figuren 32 bis 34 dargestellte Endlage einnimmt. Um ein Weiterschieben des Verriegelungselementes 80 innerhalb der Einschuböffnung 74 zu erreichen, drückt das Verriegelungselement 80 die Sicherungslasche von dem Grundkörper 64 weg, wie dies in der Fig. 31 dargestellt ist. Die Sicherungslasche 85 wird soweit von dem Grundkörper 64 weggedrückt, daß die Sicherungslasche 85 über die Nase 88 hinweg geschoben werden kann. Durch diese Bewegung werden gleichzeitig die freien Schenkel 81, 82 zwischen die Seitenwände 77 und die Außenflächen 92 der Wandsektoren 71 geschoben, so daß die freien Schenkel 81, 82 sowohl an der Seitenwand 77 als auch an der Außenfläche 91 der Wandsektoren 71 anliegen, so daß eine radial auswärts gerichtete Bewegung der Wandsektoren 71 verhindert wird. Die Fig. 33 zeigt die Stellung der Schenkel 81, 82, in der die Verriegelung erreicht ist.

Fig. 34 zeigt die Stellung der Sicherungslasche 85, die diese einnimmt, wenn die Verriegelungsstellung erreicht ist. In dieser Stellung greift die Nase 88 in die Öffnung 86 ein. In dieser Stellung kann auch ein Endabschnitt des Verbindungselementes sich durch die Aufnahme 68 bis in die Öffnung 86 hinein erstrecken.

Durch die Nase 88, die sich wenigstens teilweise in die Öffnung 86 hinein erstreckt, wird sichergestellt, daß die Verriegelung nicht unbeabsichtigt gelöst wird. Zur Endriegelung muß die Sicherungslasche von dem Grundkörper 65 weg bewegt werden, so daß die Nase 88 nicht mehr in die Öffnung 86 eingreift, so daß das Verriegelungselement 80 aus der Verriegelungsstellung in eine Montagestellung verschoben werden kann.

Die Aufnahme 68 ist vorzugsweise rotationssymmetrisch ausgebildet. In diese greift ein entsprechend ausgestaltetes rotationssymmetrisches Verbindungselement ein. Hierdurch wird eine Verdrehbarkeit des Anschlußgliedes 63 um die Längsachse der Aufnahme erreicht, wodurch eine verbesserte Auslenkbarkeit einer Energieführungskette zur Seite hin ermöglicht wird.

### Bezugszeichenliste

- 1: Kettenglied
- 2, 3: Kettenlasche
- 4, 5: Traverse
- 6: Gelenkkörper
- 7: Gelenkaufnahme
- 8: Kanalabschnitt
- 9: Abschnitt
- 10: Bereich
- 11: Achse
- 12: Energieführungskette
- 13: Gelenkachse
- 14: Längsachse
- 15: Schwenkachse
- 16: Verbindungsbereich
- 17: Spalt
- 18: Außenmantelbereich
- 19: Innenmantelbereich
- 20: Freiraum
- 21: Kettenglied
- 22, 23: Kettenlasche
- 24, 25: Traverse
- 26: Gelenkkörper
- 27: Gelenkaufnahme
- 28: Kanalabschnitt
- 29: Abschnitt
- 30: Bereich
- 31: Achse
- 32: Fortsatz
- 33: Ausnehmung
- 34: Stirnfläche
- 35: Energieführungskette
- 36: Gelenkachse
- 37: Kettenglied
- 38: Kettenlasche
- 39: Kettenlasche
- 40: Traverse
- 41: Traverse
- 42: Gelenkkörper
- 43: Gelenkkörpersegmente
- 44: Schlitz
- 45: Kragen
- 46: Gelenkaufnahme
- 47: Vertiefung
- 48: Filmscharnier
- 49: Filmsteg
- 50: Ausnehmung
- 51: Ausnehmung
- 52: Spalt
- 53: Vorsprung
- 54: Rand
- 55: Speerelement
- 56: Haken
- 57: Gegenhaken
- 58: Steg
- 59: Raum
- 60: Kanalabschnitt
- 61: Anschlagelelement
- 62: Anschlagfläche
- 63: Anschlußglied
- 64: Grundkörper
- 65: Lasche
- 66: Gelenkaufnahme
- 67: Vertiefung
- 68: Aufnahme
- 69: Wandung
- 70: Bodenwand
- 71: Wandsektor
- 72: Schlitz
- 73: Wandsektor
- 74: Einschuböffnung
- 75: Einschubtasche
- 76: Steg
- 77: Seitenwand
- 78: Vorsprung
- 79: Deckwand
- 80: Verriegelungselement
- 81: Schenkel
- 82: Schenkel
- 83: Basis
- 84: Anschlag
- 85: Sicherungslasche
- 86: Öffnung
- 87: Stirnfläche
- 88: Nase
- 89: Anschlagfläche
- 90: Eintrittsöffnung
- 91: Außenfläche
- 92: Innenfläche

## Patentansprüche

1. Energieführungskette zum Führen von Leitungen zwischen einem ortsfesten und einem beweglichen Anschluß, mit gelenkig miteinander verbundenen Kettengliedern (1, 21, 37) aus Kunststoff, die jeweils einen sich in Richtung der Energiefuhrungskette (12, 35) erstreckenden Kanalabschnitt (8, 28, 60) begrenzen, wobei jedes Kettenglied (1, 21) zwei voneinander beabstandete einander gegenüberliegende, sich in einer Längsrichtung der Energieführungskette (12, 35) erstreckende, Kettenlaschen (2, 3, 22, 23; 38, 35) aufweist, die durch wenigstens eine Traverse (4, 5, 24, 25, 40, 41) miteinander verbunden sind, jede Kettenlasche (2, 3; 22, 23, 38, 39) einen Gelenkkörper (6, 26, 42) und eine Gelenkaufnahme (7, 27, 46) aufweist, die im wesentlichen quer zur Längsrichtung der Energiefuhrungskette (12, 35) verlaufen, wobei der Gelenkkorper (6, 26, 42) einer Kettenlasche (2, 3, 22, 23; 38, 39) in die Gelenkaufnahme (7, 27, 46) einer benachbarten Kettenlasche (2, 3; 22, 23; 38, 39) greift, **dadurch gekennzeichnet, daß** zwischen den sich teilweise überlappenden Kettenlaschen (2, 3; 22, 23, 38, 39) zweier benachbarter Kettenglieder (1, 21, 37) jeweils ein Freiraum (20) vorgesehen ist, und daß der Gelenkkorper (6, 26, 42) eine Außenmantel fläche (18) und die Gelenkaufnahme (7, 27, 46) eine von der Außenmantelfläche (18) abweichende Innenmantelfläche (19) aufweisen, so daß lediglich zwei diametral gegenüberliegende Bereiche dieser Außen-mantel (18) und Innenmantelflächen (19) aneinander liegen.

2. Energieführungskette nach Anspruch 1, **dadurch gekennzeichnet, daß** die Normalen der Außenmantelbereiche (18) und der Innenmantelbereiche (19) im wesentlichen senkrecht zur Langsrichtung der Energieführungskette (12, 35) verlaufen.

3. Energieführungskette nach Anspruch 1 oder 2, **dadurch gekennzeichnet, daß** der Gelenkkörper (6, 26, 42) im wesentlichen zylinderförmig ausgebildet ist und die Gelenkaufnahme (7, 27, 42) einen im wesentlichen ovalen Querschnitt aufweist.

4. Energieführungskette nach Anspruch 1 oder 2, **dadurch gekennzeichnet, daß** der Gelenkkörper (6, 26, 42) einen im wesentlichen ovalen Querschnitt und die Gelenkaufnahme (7, 27, 46) einen kreisförmigen Querschnitt aufweist.

5. Energieführungskette nach einem der Ansprüche 1 bis 4, **dadurch gekennzeichnet, daß** zwei benachbarten Kettenglieder (1, 21, 37) relativ zueinander in einem Winkelbereich bis ca. 45° verschwenkbar sind.

6. Energieführungskette nach einem der Ansprüche 1 bis 5, **dadurch gekennzeichnet, daß** der Gelenkkörper (42) aus durch Schlitze (44) voneinander getrennten Gelenkkörpersegmenten (43) gebildet ist.

7. Energieführungskette nach einem der Ansprüche 1 bis 6, **dadurch gekennzeichnet, daß** der Gelenkkörper (42) im Bereich seines freien Endabschnittes einen radial auswärts gerichteten Kragen (45) aufweist.

8. Energieführungskette nach Anspruch 7, **dadurch gekennzeichnet, daß** konzentrisch zu einer Gelenkaufnahme (46) eine Vertiefung (47) vorgesehen ist, in die der Kragen (45) mit Spiel eingreift.

9. Energieführungskette nach einem der Ansprüche 1 bis 8, **dadurch gekennzeichnet, daß** die Traverse (4, 24) einen konvex gekrümmten Abschnitt (9,29) aufweist, der in einer im wesentlichen quer zur Kettenlasche (1, 21) verlaufenden Ebene liegt, und einen gegenüberliegenden, korrespondierend zum konvex gekrümmten Abschnitt (9, 29) ausgebildeten Bereich (10, 30), wobei der Abschnitt (9, 29) der Traverse (4, 24) eines Kettengliedes (1, 21) in den Bereich (10, 30) der Traverse (4, 24) eines benachbarten Kettengliedes (1, 21) eingreift.

10. Energieführungskette nach Anspruch 9, **dadurch gekennzeichnet, daß** der konvex gekrümmte Abschnitt (29) an einem freien Endbereich eines sich in Längsrichtung der Energieführungskette erstreckenden Fortsatzes (32) ausgebildet ist, und daß die Traverse (24) Ausnehmung (33) aufweist, die in den Bereich (30) übergeht, wobei sich die Ausnehmung (33) von einer Stirnfläche (34) der Traverse (24) in Richtung des Bereichs (30) verjüngt.

11. Energieführungskette nach Anspruch 9 oder 10, **dadurch gekennzeichnet, daß** zumindest der Abschnitt (9; 29) und der Bereich (10; 30) symmetrisch bezüglich einer im wesentlichen parallel zur Längsachse der Energieführungskette verlaufenden Achse (11; 31) ausgebildet sind.

12. Energieführungskette nach einem der Ansprüche 1 bis 11, **dadurch gekennzeichnet, daß** zwei benachbarte Kettenglieder (1; 21) zwei im Abstand zueinander liegende äußere Gelenkachsen (13) aufweisen, daß die benachbarten Kettenglieder (1; 21) Traversen (4; 24) aufweisen, deren Gesamterstreckung zwischen den Gelenkachsen ( 13) größer ist der Abstand der äußeren Gelenkachsen (13) zueinander.

13. Energieführungskette nach einem der Ansprüche 1 bis 12, **dadurch gekennzeichnet, daß** wenigstens zwei benachbarten Kettenglieder (1; 21) zwei voneinander beabstandete einander gegenüberliegende, sich quer zur Längsrichtung der Energieführungskette (12; 35) erstreckende, Traversen (5; 25) aufweisen, wobei in einem gestreckten Zustand der Energieführungskette (12; 35) die in einer gemeinsamen Ebene liegenden Traversen (5; 25) der benachbarten Kettenglieder (1; 21) voneinander beabstandet sind und diese Traversen (5; 25) in einem gekrümmten Bereich aneinander liegen.

14. Energieführungskette nach einem der Ansprüche 1 bis 13, **dadurch gekennzeichnet, daß** eine Traverse (40) mit einem Ende lösbar mit einer Kettenlasche (38) verbindbar und mit der anderen Kettenlasche (39) durch ein Filmscharnier (48) verbunden ist.

15. Energieführungskette nach Anspruch 14, **dadurch gekennzeichnet, daß** im Bereich des Filmschamiers (48) die Traverse (40) wenigstens einen Vorsprung (53) aufweist, so daß in einer geschlossenen Stellung der Traverse (40 der Vorsprung (53) an einem Rand der Kettenlasche (39) aufliegt.

16. Energieführungskette nach Anspruch 14 oder 15, **dadurch gekennzeichnet, daß** die Traverse (40) einen Deckel bildet.

17. Energieführungskette nach einem der Ansprüche 1 bis 16, **dadurch gekennzeichnet, daß** wenigstens eine Kettenlasche (38, 39) an einem Ende ein Anschlagelement (61) und an dem anderen Ende eine Anschlagfläche (62) aufweist, wobei die Anschlagfläche (62) im wesentlichen parallel zu einer Mittelebene der Kettenlasche (38, 39) ausgebildet ist.

18. Energieführungskette nach einem der Ansprüche 1 bis 17, wobei diese wenigstens ein Anschlußglied (63) aufweist, **dadurch gekennzeichnet, daß** das wenigstens eine Anschlußglied (63) einen Grundkörper (64) mit wenigstens einer Aufnahme (68), in die ein an einem Anschlußpunkt befestigtes Verbindungselement einbringbar ist, und ein mit dem Grundkörper (68) zusammenwirkendes Verriegelungselement (80) aufweist, welches in einer Einschuböffnung (74) des Grundkörper (64) derart verschieblich angeordnet ist, daß das Verbindungselement (80) mit dem Grundkörper (64) verriegelbar ist.

19. Energieführungskette nach Anspruch 18, **dadurch gekennzeichnet, daß** die Aufnahme (68) durch eine Wandung (69) begrenzt ist, die an einer Bodenwand (70) angeformt und wenigstens teilweise federelastisch ausgebildet ist und die Wandung (69) mit dem Verbindungselement eine Schnappverbindung bildet.

20. Energieführungskette nach Anspruch 19, **dadurch gekennzeichnet, daß** die Wandung (69) durch wenigstens zwei Wandsektoren (71, 73) gebildet ist, die durch Schlitze (72) voneinander getrennt sind.

21. Energieführungskette nach Anspruch 20, **dadurch gekennzeichnet, daß** vier Wandsektoren (71, 73) vorgesehen sind, wobei zwei gegenüberliegende Wandsektoren (73) im wesentlichen starr und die beiden weiteren gegenüberliegenden Wandsektoren (71) im wesentlichen federelastisch ausgebildet sind.

22. Energieführungskette nach Anspruch 19, 20 oder 21, **dadurch gekennzeichnet, daß** das Verriegelungselement (80) verschieblich mit dem Grundkörper (64) verbunden ist, so daß das Verriegelungselement (80) in einer Verriegelungsstellung die Auslenkbarkeit der Wandung (69) wenigstens behindert und in einer anderen Stellung freigibt.

23. Energieführungskette nach Anspruch 22, **dadurch gekennzeichnet, daß** das Verriegelungselement (80) im wesentlichen U-förmig ausgebildet ist, wobei in der Verriegelungsstellung die freien Schenkel (81, 82) teilweise an der Wandung (69), insbesondere an den federnden Wandsektoren (71) anliegen.

24. Energieführungskette nach Anspruch 23, **dadurch gekennzeichnet, daß** der Grundkörper (64) eine Einschuböffnung (74) aufweist, in der das Verriegelungselement (80) verschieblich gehaltert ist, wobei in der Verriegelungsstellung die freien Schenkel (81, 82) teilweise an der Wandung (69), insbesondere an den federnden Wandsektoren (71), und an den Seitenflächen (77) der Einschuböffnung (74) anliegen.

25. Energieführungskette nach Anspruch 24, **dadurch gekennzeichnet, daß** das Verriegelungselement (80) eine Sicherungslasche (85) aufweist, die beabstandet zu den Schenkeln (81, 82) und im wesentlichen parallel zu diesen ausgebildet ist, wobei das Verriegelungselement (80) lediglich dann in die Verriegelungsstellung bringbar ist, wenn die Sicherungslasche (85) durch das Verbindungselement freigegeben wird.

26. Energieführungskette nach Anspruch 25, **dadurch gekennzeichnet, daß** der Grundkörper (64) eine Nase (88) aufweist, die in die Bewegungsebene der Sicherungslasche (85) hineinragt, daß die Sicherungslasche (85) eine Öffnung (86) hat, in die Nase (88) in der Verriegelungsstellung eingreift, wobei die Sicherungslasche (85) durch das Verbindungselement so auslenkbar ist, daß diese in Verriegelungsstellung bringbar ist.

27. Energieführungskette nach Anspruch 26, **dadurch gekennzeichnet, daß** die Nase (88) und die Öffnung (86) eine solche Form haben, daß ein selbsttätiges Lösen der Verriegelung nicht eintritt.

28. Energieführungskette nach einem der Ansprüche 18 bis 27, **dadurch gekennzeichnet, daß** die Aufnahme (68) den Grundkörper (64) vollständig durchdringt.

29. Energieführungskette nach einem der Ansprüche 18 bis 28, **dadurch gekennzeichnet, daß** die Aufnahme (68) und das Verbindungselement rotationssymmetrisch ausgebildet sind.

## Claims

1. Energy line guide chain for running lines between a stationary and a movable connection with jointed chain links (1, 21, 37) of plastics, which define each a channel section (8, 28, 60) extending in the direction of the energy line guide chain (12; 35), each chain link (1; 21) comprising two opposite link plates (2, 3, 22, 23; 38, 39) extending in spaced relationship in a longitudinal direction of the energy line guide chain (12; 35), which link plates are interconnected by at least on crosspiece (4, 5; 24, 25; 40, 41), each link plate (2, 3; 22, 23; 38, 39) comprising a joint body (6, 26, 42) and a joint receiver (7, 27, 46), which extend substantially crosswise to the longitudinal direction of the energy line guide chain (12, 35), wherein the joint body (6, 26, 42) of a link plate (2, 3; 22, 23; 38, 39) engages the joint receiver (7, 27, 46) of an adjacent link plate (2, 3; 22, 23; 38, 39), **characterized in that** a clearance (20) is provided respectively between the partially overlapping link plates (2, 3; 22, 23; 38, 39) of two adjacent chain links (1, 21, 37), and that the joint body (6, 26, 42) comprises an outer surface area (18) and the joint receiver (7, 27, 46) an inner envelope surface (19), which is different from the outer envelope surface (18), so that only two diametrically opposite areas of these outer envelope (18) and inner envelope surfaces (19) lie against each other.

2. Energy line guide chain according to claim 1, **characterized in that** the normal lines of the outer envelope areas (18) and the inner envelope areas (19) extend substantially perpendicularly to the longitudinal direction of the energy line guide chain (12, 35).

3. Energy line guide chain according to claim 1 or 2, **characterized in that** the joint body (6, 26, 42) is made substantially cylindrical, and the joint receiver (7, 27, 42) has a substantially oval cross section.

4. Energy line guide chain according to claim 1 or 2, **characterized in that** the joint body (6, 26, 42) has a substantially oval cross section and the joint receiver (7, 27, 46) a circular cross section.

5. Energy line guide chain according to one of claims 1 to 4, **characterized in that** two adjacent chain links (1, 21, 37) are adapted for pivoting relative to each other over an angle sector up to about 45°.

6. Energy line guide chain according to one of claims 1 to 5, **characterized in that** the joint body (42) is formed by joint body segments (43), which are separated from one another by slots (44).

7. Energy line guide chain according to one of claims 1 to 6, **characterized in that** the joint body (42) comprises in the region of its free end portion a radially outward directed collar (45).

8. Energy line guide chain according to claim 7, **characterized in that** a cavity (47) is provided in concentric relationship with a joint receiver (46), into which the collar (45) extends with a play.

9. Energy line guide chain according to one of claims 1 to 8, **characterized in that** the crosspiece (4, 24) comprises a convexly curved portion (9, 29), which lies in a plane extending substantially crosswise to the link plate (1; 21) and engages an opposite region (10, 30) made to correspond with the convexly curved portion (9, 29), the portion (9, 29) of the crosspiece (4, 24) of a chain link (1, 21) engaging the region (10, 30) of the crosspiece (4, 24) of an adjacent chain link (1, 21).

10. Energy line guide chain according to claim 9, **characterized in that** the convexly curved portion (29) is formed in a free end region of an extension (32) extending in the longitudinal direction of the energy line guide chain, and that the crosspiece (24) comprises a cutout (33), which merges into the region (30), whereby the cutout (33) is narrowing from an end face (34) of the crosspiece (24) in the direction of the region (30).

11. Energy line guide chain according to claim 9 or 10, **characterized in that** at least the portion (9, 29) and the region (10; 30) are made symmetrical with respect to an axis (11; 31) extending substantially parallel to the longitudinal axis of the energy line guide chain.

12. Energy line guide chain according to one of claims 1 to 11, **characterized in that** two adjacent chain links (1; 21) comprise two spaced-apart outer joint axes (13), that the adjacent chain links (1; 21) comprise crosspieces (4; 24), whose overall extension between the joint axes (13) is greater than the spacing between the outer joint axes (13).

13. Energy line guide chain according to one of claims 1 to 12, **characterized in that** at least two adjacent chain links (1; 21) comprise two opposite crosspieces (5; 25) extending in spaced relationship crosswise to the longitudinal direction of the energy line guide chain (12; 35), wherein in a stretched position of the energy line guide chain (12; 35), the crosspieces (5; 25) of the adjacent chain links (1; 21) are lying in a common plane and are spaced from one another, and wherein these crosspieces (5; 25) adjoin one another in a curved region.

14. Energy line guide chain according to one of claims 1 to 13, **characterized in that** a crosspiece (40) is adapted for detachably connecting with its one end to a link plate (38), and that it connects to the other link plate (39) by means of a film hinge (48).

15. Energy line guide chain according to claim 14, **characterized in that** in the region of the film hinge (48) the crosspiece (40) comprises at least one projection (53), so that in a closed position of the crosspiece (40) the projection (53) lies on an edge of the link plate (39).

16. Energy line guide chain according to claim 14 or 15, **characterized in that** the crosspiece (40) forms a cover.

17. Energy line guide chain according to one of claims 1 to 16, **characterized in that** at least one link plate (38, 39) comprises at its one end a stop element (61) and at its other end a stop surface (62), wherein the stop surface (62) is made substantially parallel to a center plane of the link plate (38, 39).

18. Energy line guide chain according to one of claims 1 to 17, the guide chain comprising at least one connecting link (63), **characterized in that** the at least one connecting link (63) comprises a base body (64) with at least one receptacle (68), which is adapted for receiving a connection element fixed to a connection point, and a locking element (80) cooperating with the base body, which is mounted displaceably in a slide-in opening (74) of the base body (64), so that the connection element (80) can be secured to the base body (64).

19. Energy line guide chain according to claim 18, **characterized in that** the receptacle (68) is defined by a wall (69), which is molded to a bottom wall (70) and made at least in part spring-elastic, and that the wall (69) forms a snap connection with the connection element.

20. Energy line guide chain according to claim 19, **characterized in that** the wall (69) is formed by at least two wall sectors (71, 73), which are separated from one another by slots (72).

21. Energy line guide chain according to claim 20, **characterized in that** four wall sectors (71, 73) are provided, whereby two opposite wall sectors (73) are made substantially rigid, and the two further opposite wall sectors (71) are made substantially spring-elastic.

22. Energy line guide chain according to claim 19, 20 or 21, **characterized in that** the locking element (80) is displaceably connected to the base body (64), so that in a locking position, the locking element (80) impedes at least the deflection capability of the wall (69), and releases it in another position.

23. Energy line guide chain according to claim 22, **characterized in that** the locking element (80) is made substantially U-shaped, whereby in a locking position the free legs (81, 82) are partially abutting the wall (69), in particular the elastic wall sectors (71).

24. Energy line guide chain according to claim 23, **characterized in that** the base body (64) comprises a slide-in opening (74), in which the locking element (80) is held for displacement, wherein the free legs (81, 82) in the locking position are partially abutting the wall (69), in particular the elastic wall sectors (71 ), and the lateral surfaces (77) of the slide-in opening (74).

25. Energy line guide chain according to claim 24, **characterized in that** the locking element (80) comprises a safety flap (85), which is made spaced apart from the legs (81, 82) and made substantially parallel to same, the locking element (80) being adapted for moving to the locking position only when the safety flap (85) is released by the connection element.

26. Energy line guide chain according to claim 25, **characterized in that** the base body (64) comprises a projection (88), which extends into the plane of movement of the safety flap (85), that the safety flap (85) has an opening (86), which engages the projection (88) in the locking position, the safety flap (85) being adapted for deflection by the connection element such that same can be moved to the locking position.

27. Energy line guide chain according to claim 26, **characterized in that** the projection (88) and the opening (86) have such a shape that no automatic release of the locking element occurs.

28. Energy line guide chain according to one of claims 18 to 27, **characterized in that** the receptacle (68) fully extends through the base body (64).

29. Energy line guide chain according to one of claims 18 to 28, **characterized in that** the receptacle (68) and the connection element are made rotationally symmetric.

## Revendications

1. Chaîne de transport d'énergie pour guider des lignes entre une connexion stationnaire et une connexion mobile, comportant des maillons de chaîne (1, 21, 37) en matière plastique, reliés les uns aux autres de manière articulée, qui limitent respectivement une section de canal (8, 28, 60) s'étendant en direction de la chaîne de transport d'énergie (12, 35), dans quel cas chaque maillon de chaîne (1, 21) présente deux éclisses de chaîne (2, 3, 22, 23 ; 38, 35), à distance l'une de l'autre, en vis-à-vis l'une de l'autre et s'étendant dans uns direction longitudinale de la chaîne de transport d'énergie (12, 35), lesquelles éclisses de chaîne (2, 3, 22, 23 ; 38, 35) sont reliées les unes aux autres par au moins une entretoise (4, 5, 24, 25, 40, 41), chaque éclisse de chaîne (2 , 3 ; 22, 23 ; 38, 39) a un corps d'articulation (6, 26, 42) et un logement d'articulation (7, 27, 46) qui s'étendent sensiblement de manière transversale à la direction longitudinale de la chaîne de transport d'énergie (12, 35), le corps d'articulation (6, 26, 42) d'une éclisse de chaîne (2 , 3 ; 22, 23 ; 38, 39) s'engageant dans le logement d'articulation (7, 27, 46) d'une éclisse de chaîne adjacente (2 ; 3, 22, 23 ; 38, 39), **caractérisée en ce qu'**un espace libre (20) est prévu respectivement entre les éclisses de chaîne (2 ; 3, 22, 23 ; 38, 39) de deux maillons de chaîne adjacents (1, 21, 37), les éclisses de chaîne (2, 3 ; 22, 23 ; 38, 39) se recouvrant partiellement, et **en ce que** le corps d'articulation (6, 26, 42) présente une surface d'enveloppe extérieure (18) et le logement d'articulation (7, 27, 46) une surface d'enveloppe intérieure (19) qui diffère de la surface d'enveloppe extérieure (18), de sorte qu'uniquement deux zones diamétralement opposées de ces surfaces d'enveloppe extérieure (18) et intérieure (19) sont disposées l'une contre l'autre.

2. Chaîne de transport d'énergie selon la revendication 1, **caractérisée en ce que** les normales des zones d'enveloppe extérieure (18) et des zones d'enveloppe intérieure (19) s'étendent sensiblement de manière perpendiculaire à la direction longitudinale de la chaîne de transport d'énergie (12, 35).

3. Chaîne de transport d'énergie selon la revendication 1 ou 2, **caractérisée en ce que** le corps d'articulation (6, 26, 42) est réalisé sensiblement en forme de cylindre et que le logement d'articulation (7, 27, 42) a une section transversale sensiblement ovale.

4. Chaîne de transport d'énergie selon la revendication 1 ou 2, **caractérisée en ce que** le corps d'articulation (6, 26, 42) a une section transversale sensiblement ovale et le logement d'articulation (7, 27, 46) une section transversale circulaire.

5. Chaîne de transport d'énergie selon l'une des revendications 1 à 4, **caractérisée en ce que** deux maillons de chaîne adjacents (1, 21, 37) sont pivotables relativement l'un à l'autre dans une zone d'angle jusqu'environ 45°.

6. Chaîne de transport d'énergie selon l'une des revendications 1 à 5, **caractérisée en ce que** le corps d'articulation (42) est formé de segments de corps d'articulation (43) séparés les uns des autres par des fentes (44).

7. Chaîne de transport d'énergie selon l'une des revendications 1 à 6, **caractérisée en ce que** le corps d'articulation (42) présente dans la zone de sa section d'extrémité libre une collerette (45) dirigée radialement vers l'extérieur.

8. Chaîne de transport d'énergie selon la revendication 7, **caractérisée en ce qu'**une cavité (47) est prévue concentriquement à un logement d'articulation (46), dans laquelle la collerette (45) s'engage avec jeu.

9. Chaîne de transport d'énergie selon l'une des revendications 1 à 8, **caractérisée en ce que** l'entretoise (4, 24) présente une section incurvée de façon convexe (9, 29), qui se trouve dans un plan s'étendant sensiblement de manière transversale par rapport à l'éclisse de chaîne (1 ; 21), et une zone (10, 30) opposée et réalisée de manière correspondante à la section incurvée de façon convexe (9 ; 29), la section (9, 29) de l'entretoise (4, 24) d'un maillon de chaîne (1, 21) s'engageant dans la zone (10, 30) de l'entretoise (4, 24) d'un maillon de chaîne adjacent (1, 21).

10. Chaîne de transport d'énergie selon la revendication 9, **caractérisée en ce que** la section incurvée de façon convexe (29) est réalisée sur une zone d'extrémité libre d'une extension (32) qui s'étend en direction longitudinale de la chaîne de transport d'énergie, et **en ce que** l'entretoise (24) a un dégagement (33) qui émerge dans la zone (30), le dégagement (33) rétrécissant à partir d'une face frontale (34) de l'entretoise (24) en direction de la zone (30).

11. Chaîne de transport d'énergie selon la revendication 9 ou 10, **caractérisée en ce qu'**au moins la section (9 ; 29) et la zone (10 ; 30) sont réalisées symétriquement par rapport à un axe (11 ; 31) s'étendant sensiblement de manière parallèle à l'axe longitudinal de la chaîne de transport d'énergie.

12. Chaîne de transport d'énergie selon l'une des revendications 1 à 11, **caractérisée en ce que** deux maillons de chaîne adjacents (1 ; 21) présentent deux axes d'articulation extérieurs (13) se trouvant à distance l'un de l'autre, **en ce que** les maillons de chaîne adjacents (1 ; 21) ont des entretoises (4 ; 24) dont l'étendue totale entre les axes d'articulation (13) est plus grande que l'écartement entre les axes d'articulation extérieurs (13).

13. Chaîne de transport d'énergie selon l'une des revendications 1 à 12, **caractérisée en ce que** qu'au moins deux maillons de chaîne adjacents (1 ; 21) présentent deux entretoises (5 ; 25) à distance l'une de l'autre, en vis-à-vis l'une de l'autre et s'étendant transversalement à la direction longitudinale de la chaîne de transport d'énergie (12 ; 35), dans quel cas dans une position étendue de la chaîne de transport d'énergie (12 ; 35) les entretoises (5 ; 25) des maillons de chaîne adjacents (1 ; 21) se trouvent dans un plan commun et sont à distance l'une de l'autre et dans quel cas ces entretoises (5 ; 25) sont disposées l'une contre l'autre dans une zone incurvée.

14. Chaîne de transport d'énergie selon l'une des revendications 1 à 13, **caractérisée en ce qu'**avec une extrémité une entretoise (40) peut être reliée de façon détachable à une éclisse de chaîne (38) et à l'autre éclisse de chaîne (39) par une charnière film (48).

15. Chaîne de transport d'énergie selon la revendication 14, **caractérisée en ce que** dans la zone de la charnière film (48) l'entretoise (40) a au moins une saillie (53), de sorte que dans une position fermée de l'entretoise (40) la saillie (53) s'applique sur un bord de l'éclisse de chaîne (39).

16. Chaîne de transport d'énergie selon la revendication 14 ou 15, **caractérisée en ce que** l'entretoise (40) forme un couvercle.

17. Chaîne de transport d'énergie selon l'une des revendications 1 à 16, **caractérisée en ce qu'**au moins une éclisse de chaîne (38, 39) présente à une extrémité un élément de butée (61) et à l'autre extrémité une surface de butée (62), la surface de butée (62) étant réalisée sensiblement de manière parallèle à un plan médian de l'éclisse de chaîne (38, 39).

18. Chaîne de transport d'énergie selon l'une des revendications 1 à 17, dans quel cas celle-ci a au moins un maillon de connexion (63), **caractérisée en ce que** l'au moins un maillon de connexion (63) présente un corps de base (64) avec au moins un logement (68), dans lequel peut être introduit un élément de liaison fixé sur un point de connexion, et un élément de verrouillage (80) coopérant avec l'élément de base (68), lequel élément de verrouillage (80) est agencé de telle façon dans une ouverture d'insertion (74) du corps de base (64) de manière à pouvoir être déplacé que l'élément de liaison (80) peut être fixé au corps de base (64).

19. Chaîne de transport d'énergie selon la revendication 18, **caractérisée en ce que** le logement (68) est limité par une paroi (69) qui est formée sur une paroi de fond (70) et qui est réalisée au moins partiellement de manière résiliente et la paroi (69) forme une liaison à cliquet avec l'élément de liaison.

20. Chaîne de transport d'énergie selon la revendication 19, **caractérisée en ce que** la paroi (69) est formée par au moins deux secteurs de paroi (71, 73) qui sont séparés l'un de l'autre par des fentes (72).

21. Chaîne de transport d'énergie selon la revendication 20, **caractérisée en ce que** quatre secteurs de paroi (71, 73) sont prévus, dans quel cas deux secteurs de paroi opposés (73) sont réalisés sensiblement de manière rigide et les deux autres secteurs de paroi opposés (71) sont réalisés sensiblement de manière résiliente.

22. Chaîne de transport d'énergie selon la revendication 19, 20 ou 21, **caractérisée en ce que** l'élément de verrouillage (80) est relié au corps de base (64) de manière à pouvoir être déplacé, de sorte que dans une position de verrouillage l'élément de verrouillage (80) empêche au moins la capacité de déviation de la paroi (69) et que dans une autre position il la libère.

23. Chaîne de transport d'énergie selon la revendication 22, **caractérisée en ce que** l'élément de verrouillage (80) est réalisé sensiblement en forme de U, dans quel cas dans une position de verrouillage les branches libres (81, 82) s'appliquent partiellement contre la paroi (69), notamment contre les secteurs résilients de paroi (71).

24. Chaîne de transport d'énergie selon la revendication 23, **caractérisée en ce que** le corps de base (64) présente une ouverture d'insertion (74) dans laquelle l'élément de verrouillage (80) est fixé de manière à pouvoir être déplacé, dans quel cas dans la position de verrouillage les branches libres (81, 82) sont appliquées partiellement contre la paroi (69), notamment contre les secteurs résilients de paroi (71), et contre les surfaces latérales (77) de l'ouverture d'insertion (74).

25. Chaîne de transport d'énergie selon la revendication 24, **caractérisée en ce que** l'élément de verrouillage (80) présente une éclisse de fixation (85) qui est réalisée à distance des branches (81, 82) et sensiblement de manière parallèle par rapport à celles-ci, l'élément de verrouillage (80) ne pouvant être amené en position de verrouillage qu'au cas où l'éclisse de fixation (85) serait libérée par l'élément de liaison.

26. Chaîne de transport d'énergie selon la revendication 25, **caractérisée en ce que** le corps de base (64) a une protubérance (88) qui s'étend dans le plan de mouvement de l'éclisse de fixation (85), **en ce que** l'éclisse de fixation (85) a une ouverture (86) dans laquelle s'engage la protubérance (88) en position de verrouillage, l'éclisse de fixation (85) pouvant être déviée de telle manière par l'élément de liaison que celle-ci peut être amenée en position de verrouillage.

27. Chaîne de transport d'énergie selon la revendication 26, **caractérisée en ce que** la protubérance (88) et l'ouverture (86) ont une telle forme qu'un déverrouillage automatique du verrouillage n'a pas lieu.

28. Chaîne de transport d'énergie selon l'une des revendications 18 à 27, **caractérisée en ce que** le logement (68) pénètre complètement le corps de base (64).

29. Chaîne de transport d'énergie selon l'une des revendications 18 à 28, **caractérisée en ce que** le logement (68) et l'élément de liaison sont réalisés à symétrie de révolution.
